# EUROPEAN PATENT SPECIFICATION

(11) **EP 4 180 576 B1**
(45) Date of publication and mention of the grant of the patent: **16.10.2024**
(21) Application number: 22207592.1
(22) Date of filing: 15.11.2022
(51) Int. Cl.: D21H 27/10, D21H 19/02, D21H 19/08, D21H 19/82, D21H 19/84

(54) **LAMINATED PACKAGING MATERIAL AND PACKAGING CONTAINER COMPRISING A BARRIER-COATED CELLULOSE-BASED SUBSTRATE**
LAMINIERTES VERPACKUNGSMATERIAL UND VERPACKUNGSBEHÄLTER MIT EINEM SPERRSCHICHTBESCHICHTETEN SUBSTRAT AUF CELLULOSEBASIS
MATÉRIAU D'EMBALLAGE STRATIFIÉ ET RÉCIPIENT D'EMBALLAGE COMPRENANT UN SUBSTRAT À BASE DE CELLULOSE REVÊTU D'UNE BARRIÈRE

(30) Priority: 15.11.2021 EP 21208175
(43) Date of publication of application: 17.05.2023
(73) Proprietor: Tetra Laval Holdings & Finance S.A., 1009 Pully (CH)
(72) Inventor: NYMAN, Ulf, 221 86 Lund (SE); MARKBO, Olivia, 221 86 Lund (SE); ALDÉN, Mats, 221 86 Lund (SE); KRIECHBAUM, Konstantin, 221 86 Lund (SE); DAMÁSIO, Renato Augusto Pereira, 221 86 Lund (SE); DE OLIVEIRA CAMPOS, Sergio Eduardo, 221 86 Lund (SE); BATISTA, Ricardo, 221 86 Lund (SE); HORCHULHAK, Allan Francisco, 221 86 Lund (SE)
(74) Representative: Tetra Pak - Patent Attorneys SE

(56) References cited:
- EP-A1- 3 686 007
- WO-A1-2010/037906

## Description

### Technical field

The present invention relates to a laminated packaging material for oxygen sensitive products, such as for liquid carton food packaging, comprising a barrier-coated paper or cellulose-based substrate, for use as a barrier sheet in the laminated packaging material, and to packaging containers comprising the laminated packaging material. The invention further relates to such laminated packaging material comprising a barrier-coated paper or cellulose-based substrate as obtained by applying at least one gas barrier coating of at least one gas barrier material to a total thickness from 2 to 5000 nm.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the innerand outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium-foil based packaging laminate for liquid food aseptic packaging is still the most cost-efficient packaging material, at its level of performance, available on the market today.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there is also a general incentive towards developing pre-manufactured films or sheets having high and multiple barrier functionalities, which may replace the aluminium-foil barrier material in the conventional laminated packaging material, or which may combine several separate barrier layers in the laminated material and adapt it to conventional processes for lamination and manufacturing.

Preferred types of such alternative, more environmentally sustainable barrier material are barrier-coated paper substrates made by aqueous dispersion coating or vapour deposition coating onto thin paper carrier substrates. There are various aqueous dispersion coating processes and vapour deposition coating processes and material recipes for such coatings, and there is a need for cost-efficient barrier materials of this "non-foil" type, i.e. non-aluminium-foil, having improved properties for use in packaging laminates for liquid food packaging, regarding barrier properties, in particular towards gases, such as oxygen gas.

An earlier patent publication WO2011/003565A1 discloses a non-aluminium-foil packaging material comprising a pre-coated and metallised Kraft paper substrate for the purpose of induction heat sealing.

The earlier patent publication WO2017/089508A1 discloses how improved barrier properties may be obtained from a metallised paper in a similar packaging laminate, by selecting a paper substrate providing optimal properties. Such a metallised paper substrate provided not only improved barrier properties, but also indicated better stability of the metallised layer for induction heat sealing purposes.

There remains, however, a need for further improved oxygen gas barrier properties over prior art gas-barrier coated paper substrates. There is also an increased need for improved properties regarding recyclability and environmental sustainability of the materials used for gas-barrier coated paper substrates and laminated packaging materials containing them.

### Disclosure of the invention

It is, accordingly, an object of the present invention to provide improved barrier-coated cellulose-based substrates, for laminating into packaging materials.

It is also an object of the invention to employ barrier-coated papers or cellulose-based substrates for providing good gas barrier properties as well as improved recyclability and sustainability, to fulfil the needs of future sustainable laminated packaging materials.

It is a further general object of the invention to provide laminated packaging materials for oxygen-sensitive products, such as non-foil laminated packaging materials for liquid, semi-liquid or wet food products, which do not contain aluminium foil but still provide good gas and other barrier properties suitable for long-term, aseptic packaging at reasonable cost.

A particular object, is to provide a, relative to aluminium foil barrier materials, cost-efficient, non-foil, paper- or paperboard-based, laminated packaging material, providing packaging with good gas and water vapour barrier properties, as well as recyclability and a sustainable environmental profile, for the purpose of manufacturing packages for long-term, aseptic food storage.

These objects are thus attainable according to the present invention by the laminated packaging material and the packaging container as defined in the appended claims, comprising a barrier-coated cellulose-based substrate as defined and described herein, or as obtained by the method of manufacturing the barrier-coated cellulose-based substrate,as described herein.

### Summary of the invention

There is thus provided a barrier-coated cellulose-based substrate, for use as a barrier sheet in a laminated packaging material for oxygen-sensitive products, comprising a cellulose-based substrate having a density of at least 900 kg/m³, and a grammage from 30 to 80 g/m², and applied on a first side of the cellulose-based substrate, at least one gas barrier coating of at least one gas barrier material to a total thickness from 2 to 7000 nm, such as from 2 to 5000 nm such as from 2 to 4000 nm, wherein the barrier-coated cellulose-based substrate comprises a ductile base layer pre-coating, which is applied by means of dispersion coating and subsequent drying, onto the surface of the first side of the cellulose-based substrate and positioned beneath the at least one gas barrier coating, the barrier-coated cellulose-based substrate thus being suitable for providing gas barrier properties in a laminated packaging material and in packages made thereof.

The at least one gas barrier coating is a barrier dispersion coating, applied by means of dispersion or solution coating onto the ductile base layer pre-coating, and a barrier deposition coating, applied by means of a vapour deposition method.

The barrier dispersion coating may comprise a polymer selected from the group consisting of vinyl alcohol polymers and copolymers, such as from the group consisting of polyvinyl alcohol, PVOH, and ethylene vinyl alcohol, EVOH, starch and starch derivatives, xylan, xylan derivatives, nanofibrillar cellulose/ microfibrillar cellulose, NFC/ MFC, nanocrystalline cellulose, NCC, and blends of two or more thereof.

The barrier deposition coating comprises a vapour deposition coating of a material selected from metals, metal oxides, inorganic oxides and carbon coatings and is applied at a thickness from 5 to 200 nm. The barrier deposition coating may be a vapour deposition coating selected from the group consisting of an aluminium metallisation coating and aluminium oxide, AlOx, and preferably it is an aluminium metallisation coating.

The at least one gas barrier coating comprises a barrier dispersion coating, first applied by means of dispersion or solution coating onto the ductile base layer pre-coating, and a barrier deposition coating, subsequently applied by means of a vapour deposition method, onto the barrier dispersion coating, the barrier dispersion coating being applied at an amount from 0.2 to 5 g/m², dry weight.

The ductile base layer pre-coating is obtained from an aqueous latex composition, such as a latex selected from the group comprising styrene-butadiene latex (SB-latex), methylstyrene-butadiene latex, styrene acrylate latex (SA-latex), acrylate latex, such as vinyl acrylic copolymers and vinyl acetate acrylate latex, styrene-butadiene-acrylonitrile latex, styrene-acrylate-acrylonitrile latex, styrene-butadiene-acrylate-acrylonitrile latex, styrenemaleic anhydride latex, styrene-acrylate-maleic anhydride latex, mixtures thereof, or bio-based latex made with plant-based polymer materials, the plant-based polymer materials being selected from the group comprising starch derivatives, including modified starches and crosslinked starches, polyisoprene, lignin-based polymers, alginates and gums, such as guar gum, and soy-based proteins.

The ductile base layer pre-coating may be made from an aqueous composition comprising a polymer binder material having inherent ductility properties selected from the group consisting of styrene-butadiene copolymer (SB) latex, styrene acrylate copolymer (SA) latex, other latexes of acrylate polymers and copolymers, such as vinyl acrylic copolymer latex and vinyl acetate acrylate copolymer latex.

The ductile base layer pre-coating may advantageously further comprise a filler material, to further smoothen the surface of the cellulose-based substrate. The filler may be of inorganic material and in a preferred embodiment comprise laminar particles of an inorganic compound. Such laminar fillers may contribute further to barrier properties in the material, by the creation of overlapping mineral flakes or lamellae, thus preventing migration of small molecules through the material. Such laminar inorganic particles may be clays, such as kaolin clay or bentonite clays, silicates and talcum particles.

The ductile base layer pre-coating is applied by means of aqueous dispersion coating at an amount from 2 to 15 g/m², such as from 5 to 15 g/m², such as from 8 to 15 g/m2, such as from 10 to 15 g/m², dry weight.

The cellulose-based substrate may further have a second ductile coating on its opposite side, which may be of the same type as the ductile base layer pre-coating on the first side of the substrate.

According to a first aspect of the invention, a laminated packaging material comprising the barrier-coated cellulose-based substrate as described herein is provided. The laminated packaging material may further comprise a first outermost protective material layer and a second innermost liquid tight material layer. The second innermost, liquid tight material layer forms the contact layer towards the product to be packed in a packaging container formed from the laminated packaging material, and may also be heat-sealable to itself or other thermoplastic materials.

The laminated packaging material may further comprise an additional layer of paper or paperboard or other cellulose-based material, constituting a bulk layer.

For the purpose of carton packaging of oxygen-sensitive food products, such as liquid, semi-liquid or wet food products, the laminated packaging material may comprise a bulk layer of paper or paperboard or other cellulose-based material, a first outermost protective and/ or liquid tight, material layer, a second innermost liquid tight and optionally heat sealable material layer and, arranged on the inner side of the bulk layer, between the bulk layer and the second innermost layer, the barrier-coated cellulose-based substrate described herein.

In a second aspect of the invention there is provided a packaging container comprising the laminated packaging material of the first aspect. In an embodiment, there is provided a packaging container intended for packaging of liquid, semi-liquid or wet food. According to an embodiment, the packaging container is manufactured at least partly from the laminated packaging material of the invention, and according to a further embodiment it is in its entirety made of the laminated packaging material.

A method of manufacturing the described barrier-coated cellulose-based substrate is also described. The method comprises a first step of providing a cellulose-based substrate, having a first side and a second side, as a moving web in a roll-to-roll system, a second step of applying a first aqueous dispersion of a ductile base layer pre-coating composition, onto the first side of the moving cellulose-based substrate, optionally applying a second aqueous dispersion of a ductile coating composition onto the other side of the moving substrate, and subsequently drying the applied ductile base layer pre-coating, and the optional second ductile coating composition, by forced evaporation, a third step of calendering the pre-coated and dried cellulose-based substrate to obtain a density of at least 900 kg/m³, such as at least 1000 kg/m³, and a fourth step comprise a first operation of applying a gas barrier coating by dispersion coating a second dispersion or solution of a barrier composition, onto the first side of the moving cellulose-based substrate with the ductile base layer pre-coating, and drying the applied gas barrier coating by forced evaporation, and a subsequent, second operation of vapour depositing a barrier deposition coating onto the first side of the moving cellulose-based substrate with the ductile base layer pre-coating and the gas barrier coating of the first operation, to a total gas barrier coating thickness from 2 to 7000 nm, such as from 2 to 5000 nm.

It has hitherto been assumed that improved gas barrier properties from barrier-coated papers may be achieved by sourcing better cellulose-based substrates, which inherently provide gas barrier properties when further laminated to any polymer layers, and/or by coating thicker layers of the barrier coating materials having the inherent gas barrier properties. It has recently become better understood, however, that the interface portion between the barrier coatings and the cellulose-based substrate may play a key role for the optimal performance of subsequently applied coatings, which contribute most with the gas barrier properties. It has been found that optimal performance may be achieved by adding a ductile base layer pre-coating onto the surface of the cellulose-based substrate. By doing so, it has been seen that the barrier qualities of the high-density cellulose-based substrate itself do not need to be so high, and the amount of coated gas barrier polymer as a barrier pre-coating may even be reduced. The resulting gas barrier properties in a packaging laminate will thus be improved, if a ductile base layer pre-coating is used, although it does not contribute with significant gas barrier properties itself, i.e. the gas barrier properties are not inherent to the material(s) of the ductile base layer pre-coating. The ductile base layer pre-coating composition should be selected to provide a ductile foundation as well as to provide an even, dense, compatible pre-coating surface to receive any further gas barrier coating. The material selected for the ductile base layer pre-coating does not need to contribute with inherent gas barrier properties, however.

The ductile base layer pre-coating material is advantageously applied in the form of an aqueous composition comprising a polymer binder material having inherent ductility properties selected from the group consisting of styrene-butadiene copolymer (SB) latex, styrene acrylate copolymer (SA) latex, other latexes of acrylate polymers and copolymers, such as vinyl acrylic copolymer latex and vinyl acetate acrylate copolymer latex, and of bio-based polymer materials. The first aqueous dispersion of the ductile base layer pre-coating composition may further contain a filler material, such as clay or other inorganic particles or pigments, and/or cellulose fibrils.

The barrier-coated cellulose-based substrate obtained by the above described method and coating layer configuration, provides improved gas barrier properties to a laminated packaging material, as well as to packaging containers made therefrom, and may also improve the recyclability and sustainability profile of such packaging materials and packaging containers.

### Detailed description

With the term "long-term storage", used in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the ability of the individual material layers to withstand thermal and mechanical loads, e.g. during folding and sealing to form packaging containers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, water, flavoured water, energy drinks, sport drinks, coffee or tea drinks, coconut water, wine, soups, jalapenos, tomatoes, sauce (such as pasta sauce), beans and olive oil are some non-limiting example of food products contemplated.

Further examples of other oxygen-sensitive food products, possible to package and protect with the laminated packaging materials of the present disclosure are e.g. dry and/or fatty foods, such as milk powders and other powdered food. Examples of fatty foods are cheese, butter and spreads. Such packaging may be flow-wrap packaging or form, fill, seal (FFS) packaging, e.g. in bags. It may also be packaging in a jar, tray, lidded spread container, collapsible tube, clam-shell package, sleeve, envelope or wrapper. In these applications, the packaging material typically undergoes folding or a similar type of stress (e.g. creasing, stretching), which make the packaging material based on the barrier-coated cellulose-based substrate of the present disclosure particularly suitable.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content.

With the term "bulk layer" is normally meant the thickest layer or the layer containing the most material in a multilayer laminate, i.e. the layer which is contributing most to the mechanical properties and dimensional stability of the laminate and the structural stability of packaging containers folded from the laminate, based on thick paper, paperboard or carton. It may also mean a layer providing a greater thickness distance in a sandwich structure, which further interacts with stabilising facing layers, which have a higher Young's modulus, on each side of the bulk layer, in order to achieve sufficient mechanical properties, such as bending stiffness, for achieveing structure stability of formed packaging containers.

The term "dispersion coating" herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any suspension, emulsion or solution or mixes thereof, that would be capable of providing such a coating after drying. Polyvinyl alcohols (PVOH, PVAL) are typical polymers suitable for dispersion coating, but may for example at high saponification degrees in practice rather be polymer solutions, or mixes of dispersed and dissolved PVOH. A dispersion-coated barrier layer or coating is formed by a dispersion coating, also called "liquid-film coating", techniques. The aqueous dispersions may comprise fine polymer particles, and thus be a latex.

The term "latex" as used herein refers to a composition comprising an aqueous suspension or dispersion or emulsion of polymer particles, which can be natural polymers, synthetic polymers, synthetic polymers derived from biomasses or combinations thereof.

Grammages of papers were determined according to the official test method of ISO 536:2019 by the unit g/m², while thickness and density were determined according to ISO 534:2011, by the units µm (m) and kg/m³, respectively.

Thickness measurements of coated polymer layers on paper may be measured and estimated by taking sliced section samples of the structure and studying them in a SEM microscope. The slicing may be done using e.g. a cryo microtome.

OTR was measured with Oxtran 2/21 (Mocon) equipment based on coulometric sensors, and evaluated according to ASTM F1927-14 and ASTM F1307-14. See further description of OTR test methods in connection with the Examples.

The method for determining OTR on flat material identified the amount of oxygen per surface and time unit at passing through a material at a defined temperature, a given atmospheric pressure, i.e at an atmosphere of 21 % oxygen (unless otherwise stated), during 24 hours. The method for determining OTR on packages identified the amount of oxygen per time unit entering the package at a defined temperature, a given atmospheric pressure, i.e at an atmosphere of 21 % oxygen (unless otherwise stated), during 24 hours.

Water vapour transmission rate (WVTR) measurements were carried out by a Permatran 3/33 (Mocon) instrument (norm: ASTM F1249-13 using a modulated infrared sensor for relative humidity detection and WVTR measurement) at 38°C and 90% driving relative humidity gradient.

Surface roughness was measured according to TAPPI 555 om-15, being the same as ISO 8791-4. The cellulose-based substrate suitable for carrying barrier-coatings for the purpose of the invention is not limited to a certain type of paper, but includes also other cellulose-based substrates, based on any type of native cellulose, fibrous or micro-/nano- fibrillar cellulose with various degree of crystallinity. The invention is not applicable, however, to substrates from plastics or polymers, such as films made from regenerated, i.e. dissolved and subsequently precipitated, chemically modified cellulose polymers.

It has been seen that the combination of a base-layer pre-coating and gas barrier coating(s), as of the present invention, may improve the gas barrier properties of a paper substrate beyond what was hitherto believed possible.

To be suitable for a final barrier-coating step by means of a vapour deposition coating process, the fibrous part of a substrate needs to be thin, such as 60 g/m² or below, such as 50 g/m² or below, preferably 45 g/m² or below, for reasons of efficiency and production economy and to avoid blistering of the coating, due to air being entrapped in a fibrous cellulose-based part of a substrate. On the other hand, cellulose-based substrates thinner or with a lower grammage than 30 g/m² may be mechanically too weak and/or less dimension stable, when they are coated with wet dispersions and subsequently dried, thus exhibiting shrinkage or curling problems or even web breaks. It is thus more preferred to use cellulose-based substrates having a grammage of from 30 to 70 g/m², such as from 30 to 65 g/m², such as from 35 to 60 g/m², such as from 35 to 55 g/m², such as from 35 to 50 g/m².

Furthermore, the pre-coated cellulose-based substrate has a high density of at least 900 kg/m³ and should also have a dense and smooth surface, for best possible interface to a further gas barrier coating applied to it. Accordingly, the barrier-coated cellulose-based substrate should be a pre-coated and calendered, such as a super- pre-coated, calendered paper. The calendering or super-calendering operation, in addition to a higher density of the substrate, also accomplishes an improved bonding between, or "integration of", the pre-coating layer and the surface of the paper substrate.

The cellulose-based substrate for use according to the invention, may be formed from cellulose fibres comprising at least 50% by dry weight of chemical pulp, such as sulphate pulp. Chemical pulp is used to obtain toughness in a paper for high-speed coating and converting processes and for use in final packages.

Sulphate or "Kraft" pulp may be advantageous for improved repulping in recycling, and general dewatering of the fibres.

For the purpose of recycling and good dewatering ability, the fibres of the cellulose-based substrate should have a Canadian Standard Freeness (CSF) higher than 300 ml, such as higher than 350 ml, such as higher than 400 ml, as measured by ISO 5267-2:2001. Correspondingly, the fibres of the cellulose-based substrate should have a Schopper-Riegler value lower than 40 degrees SR, such as lower than 36 degrees SR, such as lower than 32 degrees SR, as measured according to ISO 5267-1:1999.

Softwood pulp may provide strength/toughness properties in the resulting paper, and may be comprised in the pulp by at least 50 wt%. Preferably thus, the cellulose-based substrate comprises at least 50 wt%, such as from 60 to 100 wt%, such as from 70 to 100 wt% Kraft softwood cellulose, such as bleached Kraft softwood cellulose.

It has been seen that for some uses, such as for liquid-tight packaging of wet or liquid or viscous flowing products, it may be advantageous to use an as thin as possible cellulose-based substrate, because then less polymer may be needed in adjacent liquid-tight layers, or heat-sealable material layers.

For optimal barrier properties by means of minimal amount of barrier material, it has thus hitherto been seen that a gas barrier coating, to be coated to a few micrometers or nanometers of thickness only, onto a paper or cellulose-based substrate, needs a further foundation of a ductile base layer pre-coating to first be applied to the cellulose-based substrate.

The ductile base layer pre-coating may be obtained from an aqueous composition comprising a polymer binder material having inherent ductility properties selected from the group consisting of styrene-butadiene copolymer (SB) latex, styrene acrylate copolymer (SA) latex, other latexes of acrylate polymers and copolymers, such as vinyl acrylic copolymer latex and vinyl acetate acrylate copolymer latex.

The ductile base layer pre-coating may be obtained from obtained from an aqueous latex composition comprising a bio-based polymer binder material having inherent ductility properties, selected from the group comprising starch derivatives, polyisoprene, lignin-based polymers, alginates, gums, and soy-based proteins and latexes of one or more such bio-based polymer binder material.

The ductile base layer pre-coating may further comprise a filler material.

The ductile base layer pre-coating may be applied by means of suitable dispersion coating techniques, such as blade coating, rod coating, bar coating, smooth roll coating, reverse roll coating, lip coating, air knife coating, curtain flow coating, dip coating and slot die coating methods, and subsequent drying to evaporate the dispersion medium, normally water, by forced convection drying. Preferably, the ductile base layer pre-coating is applied by blade or rod coating technology and subsequent drying. The term aqueous dispersion coating includes coating of aqueous compositions of polymer emulsions, dispersions, suspensions, solutions and latex formulations, and also when such compositions further comprise pigments, inorganic particles or other filler material.

The ductile base layer pre-coating is obtained from an aqueous latex composition, such as a latex selected from the group comprising styrene-butadiene latex (SB-latex), methylstyrene-butadiene latex, styrene acrylate latex (SA-latex), acrylate latex, such as vinyl acrylic copolymers and vinyl acetate acrylate latex, styrene-butadiene-acrylonitrile latex, styrene-acrylate-acrylonitrile latex, styrene-butadiene-acrylate-acrylonitrile latex, styrenemaleic anhydride latex, styrene-acrylate-maleic anhydride latex, mixtures thereof, or bio-based latex made with plant-based polymer materials. Also e.g. styrene-acrylate latex or styrene-butadiene latex may be at least partly derived from biomass to provide similar performance with an improved carbon footprint.

The ductile base layer pre-coating may in an embodiment be made from substantially plant-based material sources, by producing an aqueous latex composition comprising an emulsion of a bio-based polymer binder material, such as selected from the group comprising starch derivatives, including modified starches and crosslinked starches, polyisoprene, lignin-based polymers, alginates and gums, such as guar gum, and soy-based proteins, including latex compositions of the type "Ecosphere" from Ecosynthetix, "Vytex" from Vystar, "NeoLigno" from Stora Enso, "OC-Binder" from Organoclick, "Polygal" surface coatings from Polygal. The bio-latex composition Ecosphere^{®} from Ecosynthetix is for example an aqueous latex of crosslinked starch particles. A latex may be manufactured by aqueous emulsion polymerization. Alternatively, as in the case of manufacturing a latex from a biopolymer, the biopolymer material such as starch may be plasticized under shear force to suitable particle size, and subsequently be crosslinked by the addition of a crosslinking agent. Thereafter, the biopolymer particles may be added to a water dispersion to form an aqueous latex or suspension of the particles.

The ductile base layer pre-coating composition may thus in an embodiment be made from a plant-based or bio-based polymer and be applied in the form of an aqueous latex of such polymer.

The ductile base layer pre-coating may thus be made from an aqueous latex composition comprising a polymer material having inherent ductility properties selected from the group consisting of styrene-butadiene copolymers (SB), styrene acrylate copolymers (SA), other acrylate polymers and acrylate copolymers, such as vinyl acrylic copolymers and vinyl acetate acrylate copolymers, and of aqueous latexes of bio-based polymer materials.

In a further embodiment, the ductile base layer pre-coating may be made from an aqueous latex composition comprising a bio-based polymer material having inherent ductility properties selected from the group comprising starch derivatives, including modified starches and crosslinked starches, polyisoprene, lignin-based polymers, alginates, gums, and soy-based proteins.

In yet a further embodiment, the ductile base layer pre-coating may be made from an aqueous latex composition comprising crosslinked starch particles.

The latex composition may further comprise inorganic filler particles, such as kaolin clay or other laminar clay compounds, silica particles, talcum particles and/or calcium carbonate, at from 1 to 80 weight-% of the dry content, such as from 1 to 70 wt-%, such as from 1 to 50 wt-%, such as from 1 to 40 wt-%, such as from 30 wt-%, such as from 1 to 20 wt-% of the dry content. The filler content may further support ductility, while also providing sufficient flexibility and reducing tensions in the pre-coating, such that the pre-coating can follow the cellulose-based part of the substrate as it is folded, without obtaining cracks in the pre-coating itself.

The latex composition may alternatively, or also, comprise organic filler material, such as microfibrillated cellulose.

In an embodiment, the ductile base layer pre-coating may comprise from 4 to 45 wt%, such as from 4 to 35 wt%, such as from 4 to 25 wt%, such as from 4 to 20 wt%, such as from 4 to 16 wt% of the polymer binder material having inherent ductility properties, and from 55 to 96 wt%, such as from 65 to 96 wt%, such as from 75 to 96 wt%, such as from 80 to 96 wt% of the filler material, dry weight, and optionally further compounds, such as thickening agents and crosslinking compounds, at additive amounts. Such additive amounts would be included only at up to 10 wt% of the ductile base layer pre-coating, based on dry weight.

In another embodiment, the ductile base layer pre-coating may comprise from 10 to 20 wt% of the polymer binder material having inherent ductility properties, from 75 to 85 wt-% of an inorganic filler, from 3 to 5 wt% of a crosslinking compound, such as starch, and from 1 to 2 wt% of a thickening agent, based on dry weight.

The filler material may be an inorganic filler selected from the group comprising clays, such as nano-clays including bentonite clays, kaolin clay, talcum, CaCOs, and silica particles.

Preferably, the filler material may be an inorganic laminar compound, such as bentonite clay or kaolin clay. Specifically suitable such laminar clay minerals may be laponite, kaolinite, dickite, nacrite, halloysite, antigorite, chrysotile, pyrophyllite, montmorillonite, hectorite, saponite, sauconite, sodium tetrasilicic mica, sodium taeniolite, commonmica, margarite, vermiculite, phlogopite, xanthophyllite and the like. A specific type of such nano-clay laminar particles are those of montmorillonite, e.g. sodiumexchanged montmorillonite (Na-MMT).

The ash content of the thus pre-coated cellulose-based substrate may accordingly be from 15 to 25 wt%, such as from 15 to 23 wt%, as determined by ISO1762:2019. The same range of ash content applies to a gas-barrier coated and pre-coated cellulose-based substrate, i.e. 15-25 wt%.

The ductile base layer pre-coating composition is applied at a grammage from 2 to 15 g/m², such as from 5 to 15 g/m², such as from 8 to 15 g/m², such as from 10 to 15 g/m², dry weight.

The polymer of the ductile base layer pre-coating may be selected to exhibit a glass transition temperature from -30 to +30 degrees Celsius, such as from -30 to +20 degrees Celsius, to provide inherent ductility to a paper substrate coated with a base layer pre-coating thereof.

The cellulose-based substrate may further have a second ductile coating on its opposite side, which may be of the same type as the ductile base layer pre-coating on the first side of the substrate.

The second ductile coating composition may be applied by means of aqueous dispersion coating to an amount from 1 to 10 g/m², such as from 1 to 7 g/m², such as from 1 to 6 g/m², such as from 1 to 5 g/m², such as from 2 to 5 g/m², dry weight. Particularly suitable latex compositions may be described as having a latex polymer chemical composition a styrene-butadiene copolymer or a styrene-acrylic copolymer. Such latex polymers are miscible in water at any proportion. Other particularly suitable latex polymers may be anionic aqueous dispersions of copolymers of n-butyl acrylate and styrene.

The ductile base layer pre-coating should be coated directly onto, and adjacent, the surface of the paper or cellulose-based substrate. The paper may allow moisture to migrate outwards through the laminated packaging material, and the ductile base layer pre-coating material may also allow such water vapour migration, to prevent unfavourable entrapment of moisture near a moisture sensitive barrier coating of e.g. PVOH or EVOH. Any moisture migrating through the material from the inside liquid food product in the package will slowly be further transported via the paper layer and the paperboard bulk layer of the laminated packaging material towards the outside of the packaging container. The cellulose-based substrate and the paperboard bulk layer may then "breathe away" the humidity from the barrier pre-coating and thus keep the moisture content within the gas barrier coating(s) substantially constant over time.

The ductile base layer pre-coating may be calendered after coating onto the cellulose-based substrate and forced convection drying. A calendering operation further integrates the ductile base layer pre-coating with the cellulose surface of the substrate, by improving the surface bonding while at the same time creating a smooth surface of the ductile base layer pre-coating. The calendering operation may be a super-calendering operation involving multiple high-pressure roller nips and at least one thermo-roller nip, such as more than 4 high-pressure roller nips, such that the density of the pre-coated cellulose-based substrate may be increased to at least 900 kg/m³, such as above 1000 kg/m³, such as above 1100 kg/m³. The temperature of the thermo-roller may provide a surface temperature of from 100 to 300 °C, such as from 100 to 240 °C.

The solids content in the aqueous latex coating applied may be in the range of from 45 to 70 wt-%, such as from 45 to 60 wt-%, such as from 47 to 55 wt-%, such as from 48 to 51 wt-%.

The most suitable type of system for dispersion coating of the ductile pre-coating or coating compositions are blade coaters or rod coaters, where a large amount of coating composition is applied to the paper and the surplus is scraped off again. The coating composition is applied onto the substrate by an applicator. Common applicators may be jet applicators, roll applicators and short dwell time applicators (SDTA). An advantage of roll applicators is that bad formation of a substrate paper is less critical for the roll applicator and it is therefore well suited when thick coatings are desired. Blades that are used to scrape off excessive amount of coating are made of steel and may be equipped with a ceramic tip that makes them last longer. After the coating is applied it passes trough a drier, usually an IR-drier, hot air drier or a cylinder drier.

The grammage of the ductile, pre-coated cellulose-based substrate may in an embodiment be from 40 to 80 g/m², such as from 40 to 75 g/m², such as from 40 to 70 g/m², such as from 40 to 65 g/m².

The thickness of the ductile, pre-coated cellulose-based substrate may be from 35 to 70 µm, such as from 35 to 65 µm, such as from 40 to 60 µm, such as from 45 to 60 µm.

The first, top side of the ductile, pre-coated cellulose-based substrate may exhibit a very low porosity.

The ductile base layer pre-coating may be applied as an aqueous latex composition having a solids content from 48 to 51 wt%, and a Brookfield viscosity from 100 to 1000 mPa.s, a pH from 5.5 to 8.

The ductile base layer pre-coating may further be applied as an aqueous composition by means of blade or rod coating, at an amount from 5 to 15 g/m², dry weight.

The thus obtained pre-coated and dried cellulose-based substrate may subsequently be super-calendered, such as at a calender nip pressure of at least 100 kN, such as at least 200 kN, such as 300kN or above, and at a thermo-roller surface temperature from 100 to 300 °C, such as from 100 to 240 °C, such as from 150 to 240 °C. The cellulose-based substrate including the ductile base layer pre-coating, may be calendered to obtain an air permeance value lower than 100 nm/(Pa.s), which is the lower limit of the range within which the test method ISO 5636-5:2013 is applicable, and further to an air permeance value lower than 1 nm, such as from 40 to 900 pm/(Pa.s), such as from 40 to 800 pm/(Pa.s), such as from 100 to 700 pm/(Pa.s), such as from 200 to 500 pm/(Pa.s), as determined by the SCAN-P 26:78 test method. It is believed that the remarkably dense surface obtained by the ductile pre-coating base layer of the high-density cellulose-based substrate further promotes the effect of robustness of gas barrier properties beyond what has hitherto been seen, when subsequently coated with thin gas barrier coatings.

The ductile, pre-coated cellulose-based substrate may have a surface roughness of the first, top side lower than 100 ml/min Bendtsen, such as lower than 80 ml/min Bendtsen, such as lower than 50, such as lower than 30, such as lower than 20 ml/min Bendtsen, as measured according to SS-ISO8791-2:2013.

A different measurement of the surface roughness is the Parker Print Surface (PPS) roughness, measured according to TAPPI 555 om-15, being the same as ISO 8791-4.

The PPS roughness of the first, top side ductile, pre-coated cellulose-based substrate surface is preferably lower than 3.0 µm, such as lower than 2.8 µm, such as lower than 2.5 µm, such as lower than 2.2 µm, such as lower than 2.0 µm, such as 1.8 µm or below, for a further improved gas barrier coating performance, as determined by the above test method.

The cellulose-based substrate including the ductile base layer pre-coating as well as the at least one gas barrier coating, may have a PPS surface roughness lower than 3.0 µm, such as lower than 2.8 µm, such as lower than 2.5 µm, such as lower than 2.2 µm, such as lower than 2.0 µm, such as 1.8 µm or below, as measured according to TAPPI 555 om-15, being the same as ISO 8791-44.

The density of the ductile, pre-coated cellulose-based substrate may be higher than 900 kg/m³, such as higher than 1000 kg/m³, such as higher than 1100 kg/m³, such as higher than 1200 kg/m³. The pre-coated cellulose-based substrate may be calendered, such as preferably supercalendered, to obtain the high density and surface smoothness.

A lower surface roughness provides for a perfect interface to subsequently applied adjacent layers and coatings, with a reduced number of imperfections such as pinholes, and unevenness in a coating layer. Consequently, the coating or further layer may be applied at a higher quality, or at a lower thickness, or both. For a same coating thickness of a gas barrier coating, better oxygen barrier properties are thus obtained in the coating itself.

The pre-coated cellulose-based substrate, including the ductile base layer pre-coating, may have a density of at least 950 kg/m³, such as at least 1000 kg/m³, such as at least 1100 kg/m³, as measured according to ISO 534:2011, and a grammage from 35 to 75 g/m², such as from 40 to 75 g/m², such as from 45 to 70 g/m², such as from 45 to 65 g/m².

The application of the ductile base-layer pre-coating, in conjunction with the calendering process of the thus coated cellulose-based substrate, provides a gain in ductility of the pre-coated cellulose-based substrate and consequently also in the final gas-barrier coated material, which will result in improved gas barrier properties also in laminated packaging materials, such that the properties are more resistant to breakage, cracking and damage in the process of converting into a package, as well as in handling and distribution of the package.

The increased ductility reduces the tendency of the material to form cracks in the paper and thereby also reduces the tendency to formation of cracks in the gas barrier coatings, thanks to a re-distribution of stress and strain over a larger surface area, e.g. during folding operations.

The at least one gas barrier coating, which provides the barrier-coated cellulose-based substrate of the invention with its basic gas barrier properties, is a gas barrier dispersion coating, applied by means of dispersion or solution coating, and a barrier deposition coating, applied by means of a vapour deposition method.

Gas barrier coatings applied by means of coating of aqueous dispersion or solution of gas barrier compositions may comprise polymers which have inherent gas barrier properties, and which are food safe and environmentally sustainable both regarding recyclability and in industrial coating and lamination processes. Such polymers are thus water dispersible and/or dissolvable in water and may be applied by means of an aqueous "dispersion coating" process, or a so called "liquid film coating" process. Nonaqueous or only partly aqueous coating compositions, such as those based on alcohols or mixtures of alcohol and water, could also be suitable for achieving the good results from this invention. They would, however, likely be less suitable from environmental sustainability point of view, than purely water-based coating compositions.

In an embodiment, the barrier dispersion coating comprises a polymer selected from the group consisting of vinyl alcohol polymers and copolymers, such as from the group consisting of polyvinyl alcohol (PVOH) and ethylene vinyl alcohol (EVOH), starch, starch derivatives, xylan, xylan derivatives, nanofibrillar cellulose/ microfibrillar cellulose (NFC/ MFC), nanocrystalline cellulose (NCC) and of blends of two or more thereof.

The barrier dispersion coating is applied by means of dispersion or solution coating at a total amount of from 0.2 to 5 g/m², such as from 0.5 to 5 g/m², such as from 0.5 to 4 g/m², such as from 0.5 to 3.5 g/m², such as from 1 to 3.5 g/m², such as from 1 to 3 g/m², dry weight.

Processes suitable for coating of low dry-content gas-barrier polymer dispersion/ solution compositions are broadly any suitable wet coating methods, such as gravure roll coating, smooth roll coating, reverse roll coating, wire bar coating, blade coating, lip coating, air knife coating, and curtain flow coating methods. The experiments for the present invention were performed by means of smooth roller coating, but it is believed that any of the above or other liquid film coating methods that would contribute to generate a homogeneous layer with smooth and even coated surface would be suitable for providing gas barrier coatings out the invention.

In a more specific embodiment, the barrier dispersion coating compositions are based on the two most common types of polymers and coplymers suitable for dispersion coating, based on on vinyl alcohol monomers, i.e. polyvinyl alcohol (PVOH) and ethylene vinyl alchol (EVOH).

The gas barrier polymer may preferably be PVOH, because it provides good film formation properties, gas barrier properties, cost efficiency, food compatibility and odour barrier properties.

A PVOH-based gas barrier composition performs best when the PVOH has a degree of saponification of at least 98 %, preferably at least 99 %, although also PVOH with lower degrees of saponification will provide oxygen barrier properties.

On the other hand, EVOH may be advantageous by providing some moisture resistance to the barrier material, since the copolymer comprises ethylene monomer units. The amount of ethylene monomer units depends on the choice of EVOH grade, but its presence will be at the expense of some oxygen barrier property, in comparison to pure PVOH. Conventional EVOH polymers, are normally intended for extrusion and are not possible to disperse or dissolve in an aqueous medium in order to produce a thin liquid film coated barrier film of 3,5 g/m² or below. It is believed that EVOH should comprise a rather high amount of vinyl alcohol monomer units to be water-dispersible and that the properties should be as close to those of liquid film coating grades of PVOH as possible. An extruded EVOH layer is thus not an alternative to a liquid film coated EVOH, because it inherently has less similar properties to PVOH than EVOH grades for extrusion coating, and because it cannot be applied at a cost-efficient amount below 5 g/m² as a single layer by extrusion coating or extrusion lamination.

Nano-crystalline cellulose, NCC, is a form of nano-cellulose but is not the same as "microfibrillar cellulose", "MFC" (CMF) or "nanofibrillar cellulose", NFC (CNF)".

MFC/ NFC may thus contain longer particles, so-called "fibrils" having a width of 3-1000 nm, and a length of at least 1 µm, such as up to 10 µm, such as up to 100 µm.

Both MFC and NFC have an aspect ratio of 50 or above, while NCC/ CNC may be defined to have an aspect ratio below 50, e.g. in accordance with ISO/TS 20477:2017 and the draft TAPPI norm WI3021.

The term "NCC", is used for shorter particles and "rod-like" particles, having a width of 3-100 nm, and a length from 100 to above 1000 nm, such as from 100 to 3000 nm, such as from 100 to 1000 nm, such as from 100 to 500 nm. The majority of the NCC particles in the composition should have this dimension, may be from 100 to 500 nm length, such as from 100 to 200 nm and with a small width of from 3 to 100 nm.

The barrier dispersion coating composition may further comprise from about 1 to about 20 weight %, of an inorganic laminar compound based on dry coating weight, such as exfoliated nanoclay particles, such as bentonite. Thus, the barrier layer may include from about 99 to about 80 weight % of the polymer based on the dry coating weight. An additive, such as a dispersion stabiliser, defoamer or the like, may also be included in the gas barrier composition, preferably in an amount of not more than about 1 weight % based on the dry coating. The total dry content of the composition is preferably from 5 to 20 weight-%, such as from 7 to 15 weight-%.

A further possible additive in the barrier pre-coating composition may be a polymer or compound with functional carboxylic acid groups, in order to improve the water vapour and oxygen barrier properties of a PVOH coating. Suitably, such polymer with functional carboxylic acid groups is selected from among ethylene acrylic acid copolymer (EAA) and ethylene methacrylic acid copolymers (EMAA) or mixtures thereof. In one embodoment, such a barrier layer mixture may essentially consist of PVOH, EAA and an inorganic laminar compound. The EAA copolymer may be included in the barrier layer in an amount of about 1-20 weight %, based on dry coating weight.

It is believed that some further improved oxygen and water barrier properties may result from an esterification reaction between the PVOH and the EAA at an increased drying temperature, whereby the PVOH is crosslinked by hydrophobic EAA polymer chains, which thereby are built into the structure of the PVOH. Crosslinking can alternatively be induced by the presence of polyvalent compounds, e.g. metal compounds such as metaloxides. Such mixtures are, however, more expensive because of the cost of the additives and may be less preferred from a recyclability point of view.

Thus, while it is more preferable to use a barrier dispersion coating from a pure PVOH or EVOH composition, advantageous gas barrier results may be obtainable also with barrier dispersion coatings comprising further additives as described above.

The barrier dispersion coating may thus be applied at a total amount of from 0.2 to 5 g/m², such as from 0.2 to 4 g/m², more preferably from 0.5 to 4 g/m², such as from 0.5 to 3.5 g/m², such as from 1 to 3 g/m², dry weight. Below 0.2 g/m², there will be no gas barrier properties achieved at all, while above 3.5 g/m², the coating may bring less cost-efficiency to the packaging laminate, due to high cost of barrier polymers in general and due to high energy cost for evaporating off the liquid. A recognisable level of oxygen barrier is achieved by PVOH at 0.5 g/m², and above, and a good balance between barrier properties and costs is normally achieved between 0.5 and 3.5 g/m².

In an embodiment, the barrier dispersion coating may be applied in two or even three consecutive steps with intermediate drying, as part-layers. When applied as two part-layers or "part-coatings", each layer may suitably be applied in amounts from 0.2 to 2.5 g/m², preferably from 0.5 to 1.5 g/m², and allows a higher quality total layer from a lower amount of liquid gas barrier composition. More preferably, the two part-layers may be applied at an amount of from 0.5 to 1.5 g/m² each.

For the unexpected improvement of the invention, the barrier dispersion coating shall thus not be coated directly onto the paper or cellulose-based substrate but shall be preceded by a first ductile base layer pre-coating of a different polymer and material composition than the gas barrier material composition, to prepare the substrate surface for the application of the gas barrier coating. It is believed that the particular properties of the aqueous ductile base layer pre-coating composition promote a dense and even base layer top surface for further gas barrier coating and a compatible adhesion chemistry and wettability for the subsequent application of for example a polyvinyl alcohol-based gas barrier coating. The main improvement effect is however that the first ductile base layer pre-coating has the capability to absorb stress and strain on the barrier-coated cellulose-based substrate as it is folded and abused, when used in a laminated packaging material.

The barrier-coated cellulose-based substrate has on its first, top-side surface a first coating of a gas barrier material formed by coating and subsequent drying of a dispersion or solution of an aqueous gas barrier composition, and further a vapour deposition coating of a gas barrier material, such as selected from metals, metal oxides, inorganic oxides and amorphous diamond-like carbon, applied onto the first barrier dispersion coating.

The barrier-coated cellulose-based substrate may thus be coated with a gas barrier material by means of vapour deposition coating onto its top-side surface to a thickness of from 2 to 80 nm, such as from 2 to 50 nm, such as from 2 to 45 nm.

The vapour deposited barrier coating to finally be coated onto the top-side surface of the cellulose-based substrate, is applied by means of physical vapour deposition (PVD) or chemical vapour deposition (CVD), for example by plasma enhanced chamical vapour deposition (PECVD).

Generally, below 5 nm the barrier properties may be too low to be useful and above 200 nm, such as above 100 nm, such as above 50 nm, depending on the type of vapour deposition coating, the barrier coating may be less flexible and, thus, more prone to cracking when applied onto a flexible substrate and would also cost more.

Other examples of vapour deposition coatings are aluminium oxide (AlOx, Al₂O₃) and silicon oxide (SiOx) coatings. Generally, PVD-coatings of such oxides are more brittle and less suitable for incorporation into packaging materials by lamination, while metallised layers as an exception do have suitable mechanical properties for lamination material despite being made by PVD.

Normally, an aluminium metallised layer inherently has a thin surface portion consisting of an aluminium oxide due to the nature of the metallisation coating process used.

In an embodiment, such an aluminium metallised layer has been applied to an optical density (OD) of from 1.8 to 2.5, preferably from 1.9 to 2.2. At an optical density lower than 1.8, the barrier properties of the metallised film may be too low. At above 2.5, on the other hand, the metallisation layer may become brittle, and the thermostability during the metallisation process will be low due to higher heat load when metallising the substrate film during a longer time. The coating quality and adhesion may then be negatively affected.

Other coatings may be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may then obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to subsequently laminated, adjacent polymer or adhesive layers in a laminated packaging material. Particularly good adhesion to adjacent polymer layers, are obtained with polyolefins and in particular polyethylene and polyethylene-based copolymers.

The at least one gas barrier coating comprises a barrier dispersion coating, first applied by means of dispersion or solution coating onto the ductile base layer pre-coating, and a barrier deposition coating, subsequently applied by means of a vapour deposition method, onto the barrier dispersion coating.

A barrier-coated cellulose-based substrate may further be provided, which further comprises a ductile base layer coating applied also onto the backside of the substrate. Such a further ductile coating on the other side of the cellulose-based substrate ensures optimal performance upon further abuse and fold-forming of a laminated packaging material comprising the barrier-coated cellulose-based substrate, such that better oxygen barrier properties of finally shaped and filled packaging containers are obtained.

The backside of the substrate may thus optionally also be further coated with at least one gas barrier coating of at least one gas barrier material as defined in any of the above embodiments.

The gas barrier coated cellulose-based substrate obtained by the above method, thus provides excellent low OTR and low WVTR also after lamination into a laminated packaging material and further after fold-forming and sealing operations of such a laminated material into packages.

A carton-based laminated packaging material for packaging of oxygen-sensitive products may comprise a bulk layer of paper or paperboard, a first outermost, liquid tight material layer, a second innermost liquid tight, material layer and, arranged on the inner side of the bulk layer of paper or paperboard, towards the inside of a packaging container made from the packaging material, between the bulk layer and the second innermost layer, the barrier-coated cellulose-based substrate of the invention.

A paper or paperboard bulk layer for use in the invention usually has a thickness of from about 100 µm up to about 600 µm, and a surface weight of approximately 100-500 g/m², preferably about 200-300 g/m², and may be a conventional paper or paperboard of suitable packaging quality.

For low-cost aseptic, long-term packaging of liquid food, a thinner packaging laminate may be used, having a thinner paper core layer. The packaging containers made from such packaging laminates are not foldformed and more similar to pillow-shaped flexible pouches. A suitable paper for such pouch-packages usually has a surface weight of from about 50 to about 140 g/m², preferably from about 70 to about 120 g/m², more preferably from 70 to about 110 g/m². As the barrier-coated substrate in this invention in itself may contribute with some stability to the laminated material, the paper layer corresponding to a "bulk" layer may be even thinner, and interact with the barrier cellulose-based substrate in a sandwich interaction to still produce a laminated packaging material having the desired mechanical properties altogether.

The barrier-coated paper or cellulose-based substrate may be bonded to the bulk layer by an intermediate adhesive, or thermoplastic polymer bonding layer, thus binding the un-coated surface of the barrier-coated paper to the bulk layer. According to an embodiment the bonding layer may be a polyolefin layer, such as in particular a layer of a polyolefin copolymer or blend, such as including in the majority ethylene monomer units. The bonding layer may bond the bulk layer to the barrier-coated cellulose-based substrate by melt extrusion laminating the molten bonding polymer as a layer between the webs and simultaneously pressing the three layers together, while being forwarded through a lamination roller nip under simultaneous cooling, thus providing a laminated structure by extrusion lamination. Melt extrusion lamination requires a sufficient amount of molten polymer, in this case typically a polyolefin, such as low density polyethylene, to bind the two colder surfaces together A sufficient amount is typically from 12 to 20 g/m², possibly from 12 to 15 g/m².

According to an alternative embodiment, suitable bonding or tie layers in the interior of the laminated material, such as for example between the bulk or core layer and the barrier-coated cellulose-based substrate, or between the innermost, liquid tight and heat sealable layer and the barrier-coated paper substrate, may also be so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethyleneglycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

In another embodiment, the barrier-coated cellulose-based substrate may be bonded to the bulk layer by wet application of an aqueous dispersion of an adhesive composition comprising an adhesive polymer binder onto one of the web surfaces to be laminated and pressing the two paper webs together while they are forwarded through a lamination roller nip, thus providing a laminated structure by wet lamination. The moisture of the aqueous adhesive composition is absorbed into the fibrous cellulose network of the two paper layers, and partly evaporating with time, during the subsequent lamination processes. There is thus no need for a forced drying step. The barrier-coated cellulose-based substrate may thus be laminated to the bulk layer by from 0.5 to 6 g/m², such as from 1 to 5 g/m², such as from 1 to 5 g/m²,dry weight, of an interjacent bonding composition comprising a binder selected from the group consisting of acrylic polymers and copolymers, starch, starch derivatives, cellulose derivatives, polymers and copolymers of vinyl acetate, polymers and copolymers of vinyl alcohol, copolymers of styrene-acrylic latex or styrene-butadiene latex or adhesive bio-latexes. For best possible environmental and sustainability profile, adhesive binders originating from plants or non-fossil sources are preferred.

Such a low amount of an interjacent bonding composition is only possible to apply by aqueous dispersion or solution coating of a polymer binder, and is not possible to apply by extrusion coating or extrusion lamination of a single-layer polymer melt due to the nature of the molten-layer extrusion process. Since the surfaces of the layers to be bonded together are both made of cellulose, such wet lamination is made by the absorption of the aqueous medium into the respective cellulose layers, and thus a thin and dry bonding layer at the interface between the two layers may be formed.

Suitable materials for the outermost and innermost liquid-tight layers are thermoplastic polymers, such as polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. Such thermoplastic polymers also have the advantage of being readily weldable, i.e. heat sealable, to the same or similar polymers and to other materials with thermoplastic behaviour. According to an embodiment, the outermost heat sealable and liquid-tight layer is an LDPE, while the innermost heat sealable, liquid-tight layer is a blend composition of m-LLDPE and LDPE for optimal lamination and heat sealing properties.

It is also conceivable, however, that the outermost layer is merely protective towards liquid and dirt, such that any sealing of the outside surface to another surface or item, such as an opening device or the like, will be carried out by an additional glue or hot melt. For packaging of products have lower requirements regarding strength of seals and tightness, this is also valid regarding the second innermost layer. For packaging of liquid, semi-liquid, viscous flowing products and wet food, the packaging container qualities are more dependent on that the second innermost layer is also heat-sealable to produce strong and tight packages that can carry the filled product under all circumstance in handling and distribution, and thus it is required that the second innermost layer is liquid-tight as well as heat sealable.

The same thermoplastic materials, as listed regarding the outermost and innermost layers, such as polyolefins and in particular polyethylene-based materials, are also suitable in bonding layers in the interior of the laminated material, i.e. between a bulk or core layer, such as paper or paperboard, and the barrier-coated cellulose substrate. In an embodiment, the thermoplastic bonding layer may thus be a polyethylene layer, such as a low density polyethylene (LDPE) layer.

In a further embodiment, the second innermost liquid tight, heat sealable polyolefin layer is a pre-manufactured film comprising the same or similar polyolefins, as described above, for improved robustness of the mechanical properties of the packaging material. Due to the manufacturing process in film blowing and film casting operations, and optional subsequent film orientation operation steps, the polymers of such films acquire different properties from what is possible from merely (co-) extrusion coated polyolefin layers. Such a pre-manufactured polymer film thus contributes to the mechanical robustness of a laminated packaging material and to mechanical strength, package integrity and further reduced loss of barrier properties of formed and filled packaging containers from the laminate packaging material.

The laminated packaging material may have a pre-manufactured polymer film laminated between the barrier-coated cellulose-based substrate and the second innermost liquid tight material layer, for improved robustness of the mechanical properties of the laminated packaging material. A pre-manufactured film has a higher degree of orientation of the polymer of which it is made, and thus has different mechanical properties to a merely extrusion coated or extrusion laminated layer of the same or corresponding polymer. Thus, by incorporating such a film in the structure, the laminated material alttogether may be made stronger and better resistant to downstream tough treatment of the material. It is preferable to avoid such pre-manufactured films in the material, as they add costs both from sourcing of materials point of view and from the lamination operation point of view. Pre-manufactured films may have different mechanical properties and may be ranging from biaxally oriented, tough films obtained by mere extrusion cast films to films manufactured by film blowing and inherent polymer orientation occuring in that process, or with additional subsequent orientation. It is, however, preferred to use polymer materials that are merely extrusion coated or extrusion laminated.

The second innermost layer of a liquid tight, heat sealable material may be a polyolefin, preferably a blend of low density polyethylene, LDPE, and metallocene-catalysed (using a single-site or constrained-geometry catalyst), linear low density polyethylene, m-LLDPE. This is the type of polymer most used today for the innermost layer, for best balanced liquid tightness and heat sealability properties, and which generates best possible package integrity of heat sealed packaging containers. By choosing the composition of this layer carefully, the amount of polymer in this layer may be optimised to be as low as possible while still producing strong and reliable packages filled with product.

In another embodiment, the second innermost liquid tight, heat sealable material layer may be, or comprise, a pre-manufactured polymer film, the film comprising a heat-sealable thermoplastic polymer material and, optionally, a further layer of a material for providing improved robustness of the mechanical properties of the laminated packaging material.

The purpose of any one of the previously listed specific emodiments, is to add complementary properties to the laminated packaging material, when using merely the barrier-coated cellulose-based substrate as such, as a gas barrier material in the laminate structure, or wherein the applied coating provides only some gas barrier properties, or when the coating has only moisture-sensitive gas barrier materials. By laminating the barrier-coated celulose-based substrate to a further polymer film, which may add further moisture-resistance or water vapour barrier properties, the at least two different barrier materials may interact to provide further enhanced total barrier properties to the total laminate structure. Typical examples of such a pre-manufactured films, adding at least barrier properties towards water vapour, may be metallised films and polymer films including filler materials, such as flake-shaped mineral fillers or other small particles, which help to delay diffusion of water vapour through the laminated stucture. The necessary bonding layer between the barrier-coated cellulose-based substrate and the further barrier film may ensure such enhanced barrier properties, since the interjacent bonding layer acts as a "cushion" and further "gas or vapour migration interface" in the laminated structure.

The outer- and innermost, liquid-tight layers and the lamination layers in the interior of the laminate structure, do not normally and inherently add high barrier properties to migrating gas molecules or small molecules. Their purpose is to provide a direct barrier to water in liquid form from penetrating through to the cellulose-based bulk material and other paper layers. The liquid barrier layers also prevent water vapour from migrating to the cellulose to the extent that it gets wet, but are not capable of keeping the moisture content of the laminated structure at zero or at the low level of "dry" paper (which is at about 7-8 % in an environment at ambient temperature, i.e. at 23 deg C, and 50 % relative humidity, RH). The moisture content in the laminated carton material of a packaging container filled with liquid is usually rather high and migration through the material occurs, unless there is a further water vapour barrier included, such as an aluminium foil, a vapour deposited metallisation layer, other vapour deposition coating, inorganic material layer or other polymer material layer.

A laminated packaging material made according to any of the above embodiments provides good integrity when transformed into filled packaging containers, by good adhesion between the adjacent layers within the laminated construction and by providing good quality of the barrier coatings and the ductile base layer pre-coating, each and in combination. Especially, for the packaging of liquids, and wet food, it is important that the inter-layer adhesion within the laminated packaging material, as well as the oxygen gas barrier properties, is maintained also under wet packaging conditions.

A packaging container formed from a described laminated packaging material may be partly sealed, filled with liquid or semi-liquid food and subsequently sealed, by sealing of the packaging material to itself, optionally in combination with a plastic opening or top part of the package.

To conclude, robust and reliable packages for liquid food packaging for long term shelf-life and storage may be obtained by the barrier-coated cellulose-based substrate and the laminated packaging material comprising it, as defined by the invention, thanks to the over-all improved barrier properties provided that is even maintained during folding of the packaging material. The laminated packaging material structure works better for the forming into foldformed packages, both regarding the good adhesion between the barrier-coated substrate and the other layers of the laminated material and regarding the improved contribution to gas barrier properties from the barrier-coated substrate itself. The latter is likely due to an improved flexibility and resistance to stress and deformation, thanks to the ductile base layer pre-coating in the barrier-coated cellulose-based substrate. It has been seen that the ductile pre-coating is able to prevent the barrier coating and innermost liquid-tight layers to be strained to a degree resulting in crack openings. Most likely the ductile pre-coating re-distributes the high local stress and strain in the cellulose based substrate, barrier coating and innermost liquid-tight layers during folding. The strain level therfore becomes smaller and distributed over a larger area.

### Examples and description of preferred embodiments

In the following, preferred embodiments of the invention will be described with reference to the drawings, of which:
Fig. 1a schematically show in cross-section embodiments of barrier-coated cellulose-based substrates used according to the invention,
Fig. 2a shows a schematic, cross-sectional view of a laminated packaging material according to the invention, comprising the barrier-coated cellulose-based substrate of Fig. 1a,
Fig. 3a shows schematically a method, for dispersion coating a base layer or barrier pre-coating composition onto a cellulose-based substrate,
Fig. 3b shows schematically a method, for melt (co-) extrusion coating layer(s) of a thermoplastic heat sealable and liquid-tigth polymer onto a web sustrate, to form innermost and outermost layers of a packaging laminate of the invention,
Fig. 4a is showing a diagrammatic view of a plant for physical vapour deposition (PVD) coating, by using a solid metal evaporation piece, onto a substrate film,
Fig. 4b is showing a diagrammatic view of a plant for plasma enhanced chemical vapour deposition (PECVD) coating, by means of a magnetron plasma, onto a substrate film,
Fig. 5a, 5b, 5c and 5d are showing typical examples of packaging containers produced from the laminated packaging material according to the invention,
Fig. 6 is showing the principle of how such packaging containers are manufactured from the packaging laminate in a continuous, roll-fed, form, fill and seal process,
Fig. 7 is a diagram showing the effect of surface roughness on the oxygen transmission rate of different paper substrates, and
Fig. 8 shows schematically in cross-section an embodiment of a cellulose-based substrate pre-coated with a ductile base layer.

### Examples

### Example 1

Paper property characteristics were evaluated in laboratory scale to provide the most suitable cellulose-based substrate for this invention.

Table 1 below demonstrates the main properties used for selecting the most suitable paper substrate. Several paper structures were tested regarding their porosity (represented by Gurley air resistance), their mechanical resistance (represented by elongation and TEA-tensile energy absorption) and their surface smoothness (represented by Bendtsen and PPS roughness values) characteristics. The porosity of a paper can be measured either as an air resistance with the unit s/(100 ml) as determined by Tappi T460 om-02, or as an air permeance with the unit µm/(Pa s), as determined by ISO5036-5:2013. For papers with very low porosity the air permeance, with the unit µm/(Pa s), nm/(Pa s), or pm/(Pa s), is determined by SCAN-P 26:78.

Among the papers tested, the structures that presented the lowest porosity, with the highest Gurley air resistance value, at times not even detectable by the equipment due to a too high value, were papers 1, 2 and 11.

**Table 1 - Evaluated paper substrates with different porosity, mechanical resistance and surface roughness properties.**

| Samples | | **Paper type** | **Paper gramm age (g/m²)** | **Roughness (Bendtsen) (ml/m)** | | **PPS (µm)** | | **Gurle y (s/dl)** | **Elongation (%)** | | **TEA (J/m²)** | |
|---|---|---|---|---|---|---|---|---|---|---|---|---|
| | | | | **Wire** | **Felt** | **Wire** | **Felt** | | **MD** | **CD** | **MD** | **CD** |
| A | Paper 1 | GPP | 32 | 241.8 | 222.4 | 5.552 | 5.572 | * | 1.69 | 3.892 | 33.08 | 42.42 |
| B | Paper 2 | GPP | 58 | 391.6 | 336 | * | * | * | 2.456 | 3.932 | 86.42 | 80.34 |
| E | Paper 5 | CP | 45 | 156.3 | 184.2 | 4.774 | 4.475 | 41.29 | 2.232 | 7.638 | 78.55 | 123.52 |
| F | Paper 6 | CP | 60 | 8.4 | 9.4 | 1.358 | 1.442 | 9637 | 1.875 | 8.369 | 74.77 | 216.4 |
| G | Paper 7 | CP | 40 | 22.5 | 18.7 | 1.34 | 1.058 | 530.5 | 2.068 | 4.371 | 52.88 | 61.83 |
| H | Paper 8 | NC | 40 | 354.8 | 39.5 | 5.533 | 2.505 | 97.58 | 4.174 | 3.471 | 92.23 | 60.53 |
| I | Paper 9 | NC | 40 | 475.9 | 51.9 | 5.922 | 2.821 | 114.1 | 3.342 | 3.456 | 68.47 | 49.44 |
| J | Paper 10 | CP | 40 | 9.5 | 9.7 | 1.325 | 1.187 | 231.6 | 2.309 | 6.467 | 51.18 | 79.06 |
| K | Paper 11 | CP | 55 | 21 | 18 | 2.076 | 1.772 | * | 1.575 | 2.162 | 46.89 | 20.92 |

| | | | | | | | | | | | | |
|---|---|---|---|---|---|---|---|---|---|---|---|---|
| (*) Properties that exceeded the equipment's detection limit due to their high value. GPP means grease proof paper, CP means pre-coated paper and NC means non-coated paper. | | | | | | | | | | | | |

The most suitable combination of the evaluated paper properties was found to be the one described under K in Table 1 above. In order to confirm that the structure was the most suitable for gas barrier application, the base layer pre-coating and the gas barrier coating formulations were applied to validate the oxygen transmission levels achieved with the selected paper base. The ductile base layer pre-coating and the barrier coatings were applied on the felt side, i.e. the top side, of the papers.

A summary of the analyses performed for coated papers is shown in Table 2. The surface roughness of the pre-coated papers was evaluated in PPS. The effect of the base layer pre-coating on the paper roughness represents the change (in %) of roughness, measured for coated papers, in comparison to the roughness measured for uncoated papers.

The paper substrates (A, B, F, G and K) were further coated with one or two layers of a nanocrystalline cellulose, NCC, gas barrier solution (total wet thickness of ~ 25 µm). The coatings were evaluated for coating weight, roughness, kit oil, grease resistance and oxygen barrier. Evaluation of these barrier coating properties indicates the effects of the type of base paper sheet and of its initial roughness on further gas barrier coating performance.

Kit oils were evaluated according to the Tappi T559 pm96 standard (KIT test). In this test, the organic solvent mixture is dropped onto the surface of the coated papers, followed by inspecting whether the organic solvents have penetrated the barrier layer and are absorbed by the paper. For this evaluation, grade 7-12 KIT test mixtures were used.

Oxygen barrier properties for Table 2 were evaluated according to ASTM D3985 and F1927-50 standards, using a MOCON sensor instrument, Ox-Tran model 2/22. Measurements were taken at 23 °C and 70% relative humidity 1 atm, i.e. 100 % oxygen. For papers with higher initial surface roughness, OTR was measured after applying 2 coating layers (due to the failure of 1 layer to form a good barrier). For papers with low surface roughness, samples with 1 coating layer were evaluated (due to good barrier formation).

**Table 2 - Summary of analyses performed for coated papers selected for barrier application**

| Pape r | Rough -ness PPS, µm, un-coated | Numbe r of gas barrier coating layers | Rough -ness PPS, µm, coated | Dry coating weight, g/m² | Effect of coating on roughness, % | KIT rating | Grease resistance after creasing | OTR @ 70% RH, ml/m²/day |
|---|---|---|---|---|---|---|---|---|
| A | 5.572 | 2 | 4.11 | 9.17 | -38.7 | 12 | Yes | 9.72 |
| B | * | 2 | 6.99 | 9.8 | -13.8 | 12 | Yes | 35.06 |
| F | 1.442 | 1 | 1.50 | 4.18 | +5.6 | 12 | No | 30.5 |
| G | 1.058 | 1 | 1.78 | 5.08 | +14.8 | 12 | Yes | 3.06 |
| K | 1.772 | 1 | 2.66 | 5.5 | +10.4 | 12 | Yes | 3.42 |

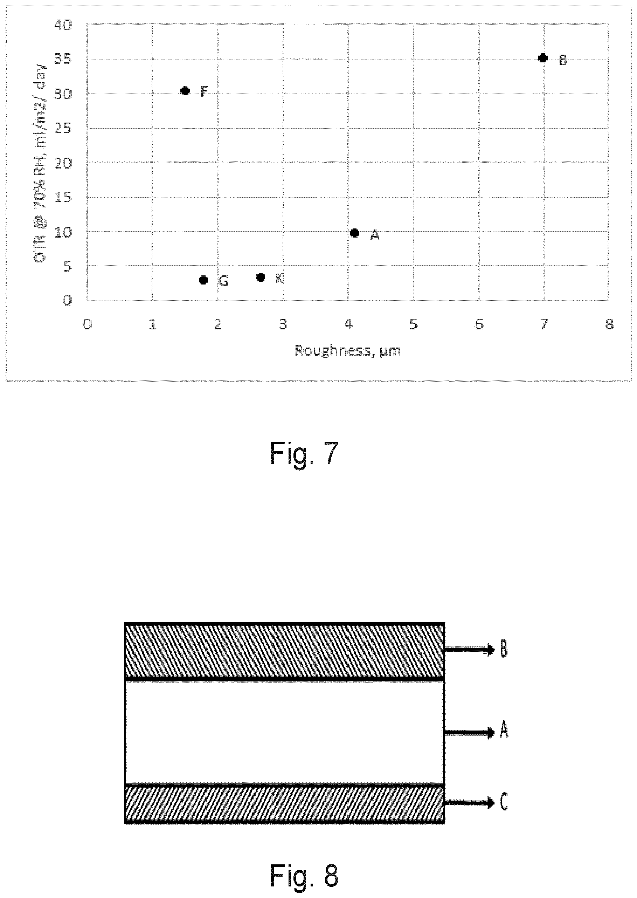

The effect of roughness on the oxygen transmission rate of barrier-coated papers is shown in Figure 7.

As shown in Table 2 and as observed, surface roughness of the substrate paper has a substantial effect on the final barrier performance after coating. First, the higher the surface roughness of the base paper, the greater weight of the applied gas barrier coating is needed, although even when wet, greater thicknesses were applied to the different papers. This can be seen for paper A and B, which have relatively high surface roughness and consequently required high gas barrier coating weights. Also, on papers with higher roughness measurements, usually >3 µm (PPS) as observed for A and B, the NCC coating barrier solution reduced the roughness of the paper. For papers with low surface roughness, there is a slight increase in roughness, but in terms of µm, the roughness remains very low.

Secondly, as can be seen in Table 2 and Figure 7, the lower the roughness of the base paper (usually <3 µm), the better the barrier performance will be after barrier application. For paper structures such as G and K, with low roughness, it can be seen that only one coating layer was sufficient to achieve excellent oxygen and grease barriers, while for papers A and B, an insufficient oxygen barrier was achieved, although a high coating weight was applied. This implies that not only is barrier performance improved, but the number of layers needed to form the barrier is also decreased. After testing the grease resistance of the papers, all papers demonstrated an excellent grease barrier (KIT 12). Moreover, all papers except paper F demonstrated grease resistance after creasing of the paper. It seems that the roughness of paper has lower effect on the grease barrier compared to the oxygen barrier.

The performance of paper F was different from the other papers tested. At low roughness, paper F showed insufficient barrier performance in terms of oxygen transmission and grease resistance. Based on the properties of Paper K, combining a low surface roughness with low porosity, and providing good oxygen barrier properties, it may be concluded that not only the roughness affects the performance of the barrier, but also the composition of the paper, i.e. its porosity, and the composition of its surface.

Paper surface roughness is a very important parameter that will affect the effectiveness of the coated barrier layer, in terms of number of layers applied, weight of coating applied and barrier performance. A PPS roughness value lower than 3 µm is required to be able to coat with just one layer and achieve good barrier performance. Surface roughness is not the only important parameter to consider, as each paper's composition and resistance properties can also affect performance.

Therefore, after studying and evaluating all the paper substrate structures described above and considering the combination of paper air resistance, i.e. porosity, surface roughness properties and the paper's performance in barrier tests after application on paper, the paper structure named as K was chosen as the most suitable structure to continue the scaleup studies and to design a proof-of-concept for validation of barrier performance.

Paper K is pre-coated and supercalendered, having a density above 1100 kg/m³ and is produced from 100 % softwood Kraft pulp.

### Example 2

The pre-coated high-density paper K is pre-coated on both sides, has a grammage of 55 g/m² and all of its content is repulpable. Figure 8 represents the structure of the pre-coated thin paper K, determined to be the best combination to ensure performance of further gas barrier coatings coated onto its top surface. The structure shown in figure 8 has ductile coatings applied to the surfaces of the top side as well as the bottom side of the paper, which will be described below. These ductile base layer coatings allow for optimal combination of low porosity and roughness to achieve the expected oxygen barrier performance. Theductile base layer pre-coating is applied directly onto the paper fibers. Directly on top of the heaviest layer on the top side (or felt side) of the paper (B in Figure 8), the gas barrier coating is to be applied, in a later step.

The fiber composition represented as A in Figure 8, is formed only from cellulose pulp fibers. These fibers are from bleached kraft softwood fibers and may have a grammage of 30 to 50 g/m². The grammage of the coated paper will then be from 40 to 65 g/m². The base paper for paper K has an uncoated grammage of 35 g/m² and a ductile, pre-coated grammage of 55 g/m².

The top and bottom surfaces of the fibrous composition A, were thus coated with aqueous pre-coatings of ductile dispersion compositions. These coatings had a pH of 5.5 to 8, solid content of 48 to 51%, Brookfield viscosity of 100 to 1000 mPa.s, while the coated material exhibits a Tg ranging from - 30 to 0 and 0 to 30 (°C), and may described in terms of chemical composition as an aqueous dispersion of a styrene-butadiene binder copolymer, a so-called SB-latex, and a kaolin clay filler. The pre-coating composition used comprised about 15 wt% of SB-latex, about 80 wt% of kaolin filler material, about 4 wt% crosslinking starch compound and further additives, such as less than 2 wt% of a thickening agent.

As illustrated in figure 8, the coating layer B applied onto the paper top side may have a weight of 5 to 15 g/m² , such as from 10 to 15 g/m², applied as a single layer. The coating composition illustrated in C, applied onto the bottom/ back of the paper, may have a grammage from 1 to 10 g/m² applied in a single layer and is also obtained from an aqueous dispersion comprising a styrene-butadiene copolymer and kaolin. The coated paper as illustrated by the set of A, B and C may thus have a final grammage between 40-65 g/m².

The thus pre-coated paper K as illustrated in Figure 8, with layers A, B and C had a grammage of 55 g/m² and final porosity lower than 100 nm/(Pa s) as determined by ISO5636-5:2013, which is the lower limit of the applicable range of the test method, and further lower than 1 nm, as determined by SCAN-P 26:78. The pre-coated paper had a PPS roughness lower than 2 µm, i.e. about 1.8 µm, on its top side. The final, NCC gas-barrier-coated paper K as of Table 2 exhibited a felt side surface roughness of about 2.8. Thus, the pre-coated and barrier-coated paper of the invention may have a PPS surface roughness of lower than 3 µm, such as from 0.5 to 3 µm.

### Example 3

Mechanical resistance properties of the pre-coated cellulose-based substrates used were explored to demonstrate the importance and contribution of each layer of the pre-coated paper composition to the final application of the barrier-coated substrates.

Material failure by nucleation and propagation of a crack in the substrate will create openings and discontinuities in the barrier coating layer, thus destroying the final package barrier. The more elongation the substrate can undergo before failure the more resilient is the substrate to various loads, such as bending during package forming. By becoming more flexible, the structure after pre-coating with a ductile material and subsequent drying and calendering, allows the pre-coated paper structure to more effectively resist bending and the initiation of breaks in its surface.

This behavior of reduced stiffness of the structure containing cellulose fibers and the top and backside coatings after calendering can be illustrated with the reduction of Young's Modulus as shown in tables 3 and 4, in both MD and CD directions of the paper. The reduction in Young's Modulus means that the stiffness of the total material structure decreases, which allows the material to gain more flexibility and thus become more resilient and resistant to creasing and folding processes.

The application of the flexible or ductile base layer pre-coating on the fibrous layer allows for a gain in ductility of the final material, which will result in a material more resistant to breakage, cracking and damage in the process of converting a package.

**Table 3 - Average of the values obtained for the stress x strain curves of each pre-coated paper layer material described in Figure 7 (i.e. A B F G K ), as well as the influence of the individual coating layers on final ductility of each of the materials in the MD direction of the paper**

| Layer or structur e | Description of the layer and surface treatment | Maxi mum Load [N] | Elong ation at Max. load [mm] | Energ y at Maxi mum Load [J] | Brea king Point Load [N] | Mod ulus [MPa ] |
|---|---|---|---|---|---|---|
| A | 100% fiber layer | 20.58 | 0.30 | 0.005 | 7.55 | 2418 .7 |
| BAC | A pre-coated on both sides | 18.05 | 0.32 | 0.004 | 6.19 | 1648 .3 |
| BAC | BAC structure after calendering | 14.60 | 0.42 | 0.005 | 7.85 | 1269 .0 |

**Table 4 - Average of the values obtained for the stress x strain curves of each pre-coated paper layer material described in Figure 7 (i.e. A B F G K), as well as the influence of the individual coating layers on final ductility of the materials in the CD direction of the paper**

| Layer or compos ition | Description of the layer and surface treatment | Maxi mum Load [N] | Elong ation at Max. load [mm] | Energ y at Maxi mum Load [J] | Brea king Point Load [N] | Mod ulus [MPa ] |
|---|---|---|---|---|---|---|
| A | 100% fiber layer | 15.00 | 0.62 | 0.007 | 2.99 | 1108 .4 |
| BAC | A pre-coated on both sides | 14.94 | 0.85 | 0.010 | 4.35 | 862. 5 |
| BAC | BAC structure after calendering | 14.20 | 0.98 | 0.010 | 4.61 | 634. 7 |

The mechanical resistance properties of the pre-coated and uncoated papers evaluated here, when in conjunction with the laboratory barrier application exploration results, provide an understanding of the excellent performance achieved. For example, the elongation at maximal load increases as the cellulose-based substrate or paper is pre-coated (measuremrents "B") and further as the pre-coated paper is calendered (measurements "C"). This confirms the beneficial effect of providing a more ductile/flexible material as substrate for the gas barrier, so that the gas barrier coated substrate can withstand higher elongation without cracking during conversion of packaging material into packages.

### Example 4

The invention described herein, in addition to bringing unique features that allow for reaching high oxygen barrier levels, is therefore a solution capable of replacing non-renewable components in packaging, has high content of renewable materials, and is 100% repulpable or recyclable according to the PTS RH 021/97 standard.

For recycling the thin, ductile, pre-coated paper substrate selected for the application developed here, in addition to the performance of repulpability tests according to PTS RH 021/97, a repulpability study was also performed in the laboratory.

To evaluate repulpability in the laboratory, a sample of known weight of paper was dispersed at 23 °C using a device with capacity of 3000 revolutions/min, for 20 minutes of agitation. After the 3rd minute of stirring, it was already possible to see that the paper is repulpable. No lumps were detected in the water suspension, indicating that the paper was already dispersed in the water.

### Example 5

A gas barrier coating formulation based on NCC was used for coating the flexible pre-coated paper substrate, which can be characterized as containing 5 to 22% solids, and having a viscosity of 600 to 2500 ± 2 mPa·s. The chemical components of the formulation were based on NCC (CNC), PVOH and starch-based materials and contained at least 50% of the renewable materials (NCC and starch), such as at least 50% of NCC, and is 100% recyclable and biodegradable.

Nanocelluloses have challenging rheologies, so when added to blends with other polymers and components, they cause a change in rheology by altering the final viscosity of the suspension. NCCs (Nanocrystalline Cellulose or Cellulose Nanocrystals) are extracted from hardwood or softwood cellulosic pulp, and all of their dimensions are on the nanometric scale. The NCCs used have all their dimensions on the nanometric scale, with widths ranging from 5 to 20 nm and lengths from 150 to 400 nm.

A double layer gas barrier layer of nanocrystalline cellulose or PVOH or other gas barrier material may be formed on the top side surface of the ductile pre-coated paper. A first gas barrier coating creates a gas barrier layer onto the ductile base layer pre-coating of the top side of the paper, and a second gas barrier coating provides a second gas barrier layer onto the first gas barrier coating layer.

The sequence of barrier layer application is essential in this case, onto the ductile pre-coated paper. The first gas barrier disperson layer is applied onto the ductile base layer pre-coating on the top side surface of the paper, by means of bar coating, and this layer is dried using infrared and hot air to form a homogeneous gas barrier layer on the surface. The application speed used in the tests was 300 to 600 m/min to ensure good quality of gas barrier coating layers formed on the ductile pre-coated paper surface. The first formed gas barrier dispersion layer prepares the surface to receive the second barrier dispersion layer, which is also formed by means of bar coating, onto the dried first barrier dispersion layer. The second gas barrier dispersion layer applied also goes through a process of film forming and drying using infrared and hot air for drying. It should be noted that the optimal range for drying using hot air tested for the formulation and the ductile pre-coated paper is from 90 to 150°C.

Drying at evaluated temperatures does not cause loss of barrier levels, and provides good formation of a coating film on the pre-coated paper surface, even at higher temperatures. Finally, to ensure proper winding and cooling of the barrier-coated paper substrate, after drying, the coated paper should be rolled at temperatures below 40 °C. This secures the formation of a homogenous film, ensuring high oxygen- and grease-barrier performance.

### Example 6

Different conditions were tested for larger scale application of a gas barrier coating on the surface of paper K, described above. The gas barrier coating was applied on a pilot coating machine that allowed for using different technologies, however, bar or blade coating methods were the application technologies used to form the gas barrier coating layers applied onto the ductile pre-coating B, as illustrated in Figure 8, with a total dry coating amount of from 0.5 to 5 g/m². Application bars are smooth, and their diameters can vary, here bar diameters from 18 to 30 mm were used. The tests were made by applying the gas barrier directly onto the ductile pre-coated base paper as illustrated in Figure 8.

In a final prototype for proof-of-concept and upscaling,the characteristics of the ductile pre-coated papers used in the development were as described in Table 5 below.

**Table 5 - Characteristics of the paper used in large-scale test**

| **Tests** | **Paper grammage (g/m²)** | **Paper thickness (µm)** | **Paper density (kg/m³)** | **Layer B coating (g/m²)** | **Layer C coating (g/m²)** | **PPS top layer (µm)** | **PPS bottom layer (µm)** | **SCAN-P 26:78 (pm/Pa.s)** |
|---|---|---|---|---|---|---|---|---|
| Large-scale Prototype | 55-60 | 45-50 | 1222-1333 | 12-15 | 5 | 2.07 | 2.1 | 206 |

In this upscaling work, it was thus seen that pre-coated paper substrates having a lower surface roughness and a lower porosity generally provided better results and provided improved oxygen barrier levels in formed and filled packages.

The barrier formulation containing NCC was thus applied onto the ductile pre-coating B on the top side of the paper substrate A (Fig. 8), i.e. onto the top surface with the highest pre-coating weight, by forming a 2-layer gas barrier coating of 2 x 2.5 g/m² of NCC, resulting in package OTR 21%O₂ (cc/pkg/24h) of 0.016 at 0.2 atm and 50% RH, according to ASTM F1307-14.

The aqueous dispersion containing cellulose nanocrystals was thus applied to surface B in a first step, thereby consolidating a final gas barrier layer measuring about 2.5 g/m², which prepared the surface to receive the second gas barrier dispersion coating layer. After applying the first layer, it is dried by infrared heating and hot air convection. A second layer measuring about 2.5 g/m² was applied onto the first gas barrier coating, to form a total 2-layer gas barrier coating of about 5 g/m². After applying the second layer, it is dried by infrared heating and hot air, and finally, the solidified resin is cooled to a temperature below 40 °C, to prevent bonding between sheets of paper with a barrier already applied on the surface (bonding the sheets with the still active, uncooled resin).

The amount applied was limited to 2.5 g/m² for each part-layer, to prevent excess water on the cellulose-based substrate. Using the pre-coated paper as described in Figure 7 allows for greater dimensional stability control as the flexible pre-coating B acts as a surface preparer as well as impacting the surface roughness and porosity of the substrate.

The application technology used for forming this gas barrier coating was a bar coating method. A bar diameter of 24 mm was used. The bar used for applying the barrier dispersion was rotating in the same direction as the paper winding with speed from 20 to 80 rpm, or in the opposite direction to the paper winding direction with speed from 80 to 160 rpm .

### Example 7

The paper stubstrate K from Table 1, as well as the previously best tested substrate paper type for carrying oxygen barrier coatings, i.e. a "Superperga WS 32 gsm Parchment FL109" greaseproof paper from Nordic Paper, were for comparison (Comparative Example 1), laminated in the same way with LDPE on their respective top sides at 20 g/m² .

The comparative paper was measured to have a surface roughness on the top side, i.e. the side to be barrier-coated, of about 36 ml/min Bendtsen. It comprised cellulose refined to a higher degree, i.e. cellulose of smaller fibrous/fibrillar molecules, to provide its dense surface and medium paper density of merely 865 kg/m³. The comparative paper is not 100 % recyclable, but leaves a reject of water-swollen, low-molecular cellulose.

The paper substrate K used in the invention had a top side Bendtsen roughness of about 20 ml/min.

The oxygen transmission rates through the flat laminated papers of Example 1 and Comparative Example 1 were measured using a coulometric detector and the evaluation was done according to ASTM F1927-14 by the unit cm³/m²/24h at 0.2 atm oxygen pressure and a moisture level of 50% relative humidity. The results from the measurements are presented in Table 6.

**Table 6. OTR for flat papers laminated with PE, cm³/m²/24h at 0.2 atm, 50% RH**

| | Comparative Example 1: Superperga WS 32 g/m² Parchment FL109 GPP | Example 1: Pre-coated paper |
|---|---|---|
| Paper | Highly refined greaseproof paper, with a density of 865 kg/m³ | High-density (supercalendered) and ductile base layer pre-coated Sulphate SW paper |
| Flat paper OTR 0.2 atm, 23 °C, 50% RH | 42 | 71 |

From the results in Table 6, it is seen that the best previously studied paper substrate as a laminated sample provides better initial, inherent OTR performance than the base layer pre-coated paper substrate of the invention.

The pre-coated paper substrates from Example 7 but without the laminated layers of LDPE on both sides, were thus instead coated with a first gas barrier coating of polyvinyl alcohol, PVOH, or NCC, respectively, onto the ductile base layer pre-coating (top side of paper substrate). The PVOH used was obtained from Kuraray and had a degree of hydrolysis of at least 98 %, i.e. Poval^{®} 6-98. The dispersion of PVOH was applied by means of a smooth roller coating method in pilot-scale equipment, and the wet amount applied of the aqueous dispersion of the PVOH was about 15 weight-%. For the purpose of anti-foaming, 0.05 volume-% of 1-octanol was added to the PVOH. The Brookfield viscosity at 23 °C of the PVOH dispersion barrier composition was 500-800 mPa·s.

The rotation speed of the coating roller was 160 rpm, with rotation in opposite direction compared to the web running direction. The coating was applied in two steps, with a dry grammage of the first and second layer of 1.6 g/m² and 1.6 g/m², respectively.

A combination of infrared irradiation IR and hot air was used for drying the coated layers and the surface temperature was kept at below 100 degrees Celcius while the web speed was about 300 m/min during coating.

In a different coating operation in the same pilot-scale equipment, a dispersion of NCC was instead applied, by means of a smooth roller coating method. The amount applied of the aqueous dispersion of the NCC was about 19-20 weight-%. The Brookfield viscosity at 23 °C of the aqueous NCC dispersion barrier composition was <2000 mPa·s and the viscosity at 50 °C was 1000-1200 mPa·s. Both IR and hot air was used for drying the coated layers and the web speed was about 300 m/min during coating. The rotation speed of the coating roller was 80 rpm, with rotation in opposite direction compared to the web running direction. The coating was applied in two steps, with a dry grammage of the first and second layer of 1.9 g/m² and 2.7 g/m², respectively.

The pre-coated and gas-barrier coated papers were then laminated with 20 g/m² LDPE on its top sides and the oxygen transmission rates were evaluated as for Example 7 and for Comparative example 1, but also including 80% moisture level. The oxygen transmission rates are shown in Table 7.

**Table 7. OTR for pre-coated and barrier-coated papers laminated with PE.**

| | PVOH 3.2gsm | NCC 4.6gsm |
|---|---|---|
| Flat paper OTR 0.2 atm, 23 °C, 50% RH | 0.31 | 0.13 |
| Flat paper OTR 0.2 atm, 23 °C, 80% RH | 7.93 | 17.2 |

From the results in Table 7, it is seen that the OTR performance of the pre-coated and barrier-coated paper is significantly improved compared to the pre-coated paper without a gas barrier coating in Table 6. Both the PVOH coating and NCC coating improves the OTR performance. It is however noted that both types of coating are sensitive to moisture, with higher OTR for 80% RH compared to OTR at 50% RH.

### Example 8

The pre-coated and gas-barrier dispersion-coated papers from Example 7 were metalized to an optical density of about 1.8. The metalized barrier papers were then extrusion coating laminated with paperboard and polymers to provide a packaging material according to the following structure:
//Outside 12 g/m² LDPE/ Duplex CLC 80 mN, 200 g/m², paperboard bulk layer/ LDPE 20 g/m² bonding layer/ barrier-coated paper substrate
(with 2x barrier coating ~4 g/m²/ Al metal OD ~1.8/ Adhesive layer EAA copolymer 6 g/m²/ blend LDPE+m-LLDPE 29 g/m²//

The liquid paperboard was prior to lamination creased to facilitate subsequent folding of packages. Lamination of the packaging material was carried out in a flexible pilot laminator with three extrusion coating stations. The lamination speed was about 400 m/min.

The Duplex CLC paperboard was a clay-coated paperboard of the conventional type, and the m-LLDPE is a metallocene-catalysed linear low density polyethylene. The barrier-coated side of the paper substrate was directed in the laminated structure towards the inside (corresponding to the inside of a packaging container manufactured from the laminated material). The adhesive polymer EAA and the innermost heat-sealable layer were coextrusion coated together onto the barrier-coated paper and the outermost layer of LDPE was extrusion coated onto the outside of the paperboard.

The oxygen transmission rates through the flat laminated packaging materials of Example 8 were measured using a coulometric detector and the evaluation was done according to ASTM F1927-14 by the unit cm³/m²/24h at 0.2 atm oxygen pressure and at moisture levels of 50% and 80% relative humidity.

### Comparative Example 2

The previously tested paper substrate also used in Comparative Example 1, was gas-barrier coated and laminated into a packaging material structure in a substantially corresponding way, except for the ductile base layer pre-coating not being included.

The paper was first coated in two consecutive dispersion coating operations with 1.5 g/m² each of PVOH (Poval^{®} 15-99, fully saponified PVOH), with drying after each step. Then it was metallised to an optical density of about 2.3.

The barrier-coated comparative paper substrate was further laminated into a packaging material structure as follows:
//Outside 12 g/m² LDPE/ Duplex CLC 80 mN, 200 g/m², paperboard bulk layer/ LDPE 20 g/m² bonding layer/ barrier-coated paper substrate
(with 2x barrier coating -1.5 g/m²/ Al metal OD ~2.3/ Adhesive layer EAA copolymer 6 g/m²/ blend LDPE+m-LLDPE 19 g/m²//

The results of OTR measurements on the laminated packaging materials of Example 8 and Comparative Example 2 are presented in Table 8.

**Table 8. OTR for flat laminated packaging materials**

| | Comparative Example: Superperga WS 32 g/m² Parchment FL109 GPP | Example 8-1: Pre-coated paper with NCC barrier coating | Example 8-2: Pre-coated paper with PVOH barrier coating |
|---|---|---|---|
| Laminate structure: /LDPE/ paperboard /LDPE/ paper + pre-coating + barrier coating + met/ inside PE polymers/ | 80 mN paperboard 1.5 g/m² PVOH; Met to OD ~2.3 | 80 mN paperboard 4.6 g/m² NCC; Met to OD ~1.8 | 80 mN paperboard 3.2 g/m² PVOH; Met to OD ~1.8 |
| Flat laminate OTR 1 atm, 23 °C, 50% RH | 1.3* | | |
| Flat laminate OTR 1 atm, 23 °C, 80% RH | 1.3* | | |
| Flat laminate OTR 0.2 atm, 23 °C, 50% RH | 0.26** | 0.39* | 0.38* |
| Flat laminate OTR 0.2 atm, 23 °C, 80% RH | 0.26** | 0.38* | 0.36* |

| | | | |
|---|---|---|---|
| * Measured at oxygen pressure 1 atm/ 0.2 atm ** Converted to oxygen pressure 0.2 atm | | | |

It can be seen in Table 8 that the OTR values for packaging material using a pre-coated and barrier coated paper are higher than for packaging material using a highly refined grease-proof paper, even though the barrier coating grammages were higher on the pre-coated paper of the invention. This can be attributed to that the OTR contribution from the paper itself is lower for the pre-coated paper compared to the highly refined grease-proof paper, see Table 7.

It is also noted that the packaging material using pre-coated and barrier coated paper are not sensitive to an increased moisture level.

### Example 9

Packages were produced in a Tetra Pak^{®} E3/CompactFlex filling machine. This type of filling machine has the capacity to fill portion packages at a speed of 9000 packages/hour and a flexibility that allows for quick change between different package formats. Packages were in the format of Tetra Brik^{®} with a volume of 200 ml.

The Oxygen transmission rate of packages (filled, emptied and dried) was measured with packages mounted on a special holder; inside the package nitrogen is purged; the outside of the package is exposed to the environment surrounding the instrument. When oxygen permeates through the package into the nitrogen carrier gas, it is transported to the coulometric sensor. The sensor reads how much oxygen that leaks into the nitrogen gas inside the package. OTR is then evaluated according to ASTM F1307-14, at 0.2 atm (surrounding air containing 21% oxygen). The measurement unit is cm3/package/24h.

**Table 9. OTR for packages, including loss factors.**

| Packaging material used | Comparative Example 2: Superperga WS 32 gsm Parchment FL109 GPP | Example 8-1: Pre-coated paper with NCC barrier coating | Example 8-2: Pre-coated paper with PVOH barrier coating |
|---|---|---|---|
| Package format | Tetra Brik^{®} Aseptic 200S | Tetra Brik^{®} Aseptic 200S | Tetra Brik^{®} Aseptic 200S |
| Package volume | 200 ml | 200 ml | 200 ml |
| Laminate area per package | 0.030 m² | 0.030 m² | 0.030 m² |
| Calculated, theoretical* OTR per package, 0.2 atm, 23 °C, 50% RH | 0.0078 | 0.0117 | 0.0114 |
| Measured OTR per package 0.2 atm, 23 °C, 50% RH | 0.075 | 0.016 | 0.013 |
| Loss factor measured/theoretical, 23 °C, 50% RH | 9.6 | 1.4 | 1.1 |

| | | | |
|---|---|---|---|
| * Using the package laminate area and the corresponding OTR value for flat packaging material in Table 2. | | | |

It is interestingly noted from Table 9, and surprisingly too, that even though the OTR values for flat laminated packaging materials using pre-coated and barrier coated paper are higher than for flat laminated packaging materials using a highly refined grease-proof paper, as seen from Table 7, the package OTR values are improved by using the pre-coated and barrier coated paper. The measured package OTR is 0.013-0.016 cm³/package/24h/0.2 atm instead of 0.075. When dividing the measured OTR values with the corresponding theoretically calculated ones it is also seen that the loss factors are close to 1 when using pre-coated and barrier coated paper, compared to a loss factor of 9.6 when using a highly refined grease-proof paper. It is evident that the gas barrier performance on the flat laminated packaging material is preserved even after folding of the packages, when using pre-coated and barrier coated paper. This is attributed to the ductile base layer pre-coating, which is able to reduce the effect of stress concentrations in the paper. Stress concentrations are otherwise an origin for cracks to initiate and propagate through the paper. If the paper cracks, a very thin barrier coating is not able to withstand the high stress and will consequently also crack, thus imparting the gas barrier. Ductile materials in particular, are able to withstand high strain and being able to re-distribute the stress concentrations in the paper during folding.

Further, relating to the attached figures:

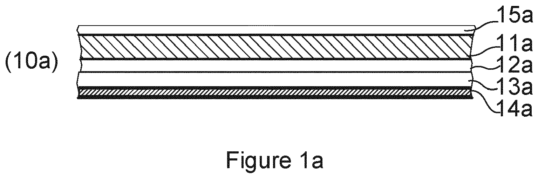

In Fig. 1a, there is shown, in cross-section, an embodiment of a barrier-coated cellulose-based substrate 10a, of the invention. The substrate 11a is a paper made from a major proportion of cellulose fibers from sulphate softwood pulp, having a grammage of 35 g/m², first provided with a ductile base layer pre-coating 12a on its top side, by applying a latex or biopolymer binder composition, such as specifically in this example an SB-latex binder composition further also comprising an inorganic laminar filler material, by means of aqueous dispersion coating and subsequent drying to evaporate the water. The dry weight of the applied ductile base layer pre-coating is about 12 g/m². Optionally, a further, second, ductile coating 15a, of the same composition as the ductile base layer pre-coating 12a, may be applied in the same manner onto the opposite, uncoated side of the paper substrate 11a. The dry weight of the, second, ductile coating is about 5 g/m². The thus pre-coated paper substrate is subsequently super-calendered by passing several high pressure roller nips and at least one thermoroll applying a surface temperature of from 100 to 240 °C.

Further, the paper substrate has a gas barrier coating 13a made from a barrier dispersion or solution coating of PVOH, Poval^{®} 6-98 from Kuraray, applied onto the surface of the ductile base layer pre-coating 12a. The gas barrier coating 13a is thus applied by means of aqueous dispersion coating and subsequently dried to evaporate the water, preferably as two consecutive part-coating steps with drying in between and after. The total dry weight of the PVOH barrier dispersion coating is about 3.5 g/m². Further and optionally, the barrier dispersion-coated paper substrate may have an aluminium barrier deposition coating 14a, i.e. an aluminium-metallised layer, applied onto the dried surface of the barrier dispersion coating 13a, and by physical vapour deposition to an OD of about 1.8.

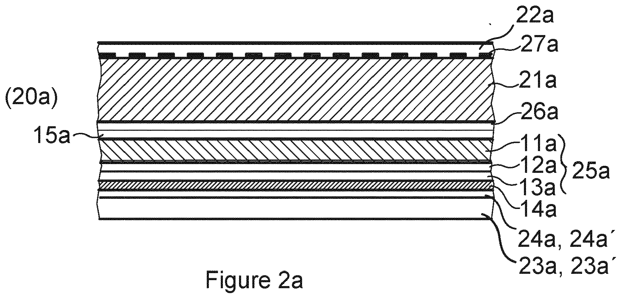

In Fig. 2a, a laminated packaging material 20a of the invention, suitable for liquid carton packaging is shown, in which the laminated material comprises a paperboard bulk layer 21a of paperboard, having a bending force of 80 mN and a grammage weight of about 200 g/m², and further comprising an outer liquid tight and heat sealable layer 22a of low density polyethylene applied on the outside of the bulk layer 21a, which side is to be directed towards the outside of a packaging container produced from the packaging laminate. The layer 22a is transparent to show the printed décor pattern 27a, applied onto the bulk layer of paper or paperboard, to the outside, thus informing about the contents of the package, the packaging brand and other information targeting consumers in retail facilities and food shops. The polyethylene of the outer layer 22a is a conventional low density polyethylene (LDPE) of a heat sealable quality, but could also include further similar polymers, including LLDPEs. It is applied at an amount of about 12 g/m². An innermost liquid tight and heat sealable layer 23a is arranged on the opposite side of the bulk layer 21a, which is to be directed towards the inside of a packaging container produced from the packaging laminate, i.e. the layer 23a will be in direct contact with the packaged product. The thus innermost heat sealable layer 23a, which is to form strong transversal heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE). This innermost layer of polyethylenes is applied at an amount of about 29 g/m².

The bulk layer 21a is laminated to the uncoated side (i.e. having no gas barrier coating applied) of the barrier-coated paper substrate 10a, from Fig. 1a, i.e. 25a, having also an aluminium barrier deposition coating 14a, i.e. an aluminium-metallised layer, applied onto the dried surface of the barrier dispersion coating 13a, by physical vapour deposition to an OD of about 1.8, by an intermediate bonding layer 26a of a low density polyethylene (LDPE). The intermediate bonding layer 26a is formed by means of melt extruding it as a thin polymer melt curtain between the two paper webs and thus laminating the bulk layer and the barrier-coated paper substrate to each other, as all three layers pass through a cooled press roller nip. The amount applied of the intermediate bonding layer 26a is about 20 g/m².

The innermost heat sealable layer 23a may consist of one layer or alternatively of two or more part-layers of the same or different kinds of LDPE or LLDPE or blends thereof, and is well adhered to the metallised barrier deposition coating surface 14a of the barrier-coated paper substrate 10a, by an intermediate coextruded tie layer 24a at an amount of about 6 g/m², e.g. of ethylene acrylic acid copolymer (EAA), which thus bonds the innermost heat sealable layer(s) to the barrier coated paper substrate 10a, by applying the layers together in one single melt coextrusion coating step of layers 24a and 23a.

In order to reduce the amount of the thermoplastic polymer fraction in recycling processes, such as extrusion laminated polyethylene polymers, and for improved repulpability of the packaging material in recycling processes, the lamination layer 26a, which is bonding the barrier-coated cellulose-based substrate 25a to the bulk layer 21a, may be a thin layer of a wet laminated polymer binder instead, obtained from drying of a dispersion-coated aqueous adhesive composition. Such a lamination step is performed in an efficient cold or ambient lamination step at industrial speed without any energy-consuming drying operation needed to accelerate the evaporation of the water. The dry weight of such a bonding layer would in such an embodiment only need to be about 6 g/m², or preferably lower, and be made from a polymer which is readily re-dispersible in water such that it is repulpable into the fraction of cellulose fibres in a carton fibre recycling process.

In a further embodiment, the back-side of the paper substrate 11a may first be coated with a second, ductile coating 15a, of the same or a similar composition as the ductile base layer pre-coating 12a, at a dry weight of about 5 g/m², as described in connection to Fig. 1a, and then the bonding layer 26a may comprise a similar aqueous adhesive composition as the ductile base layer pre-coating composition 15a. In a different embodiment, the paper substrate 11a may remain uncoated on the backside, while the amount of such bonding layer 26a may be higher, such as from 10 to about 12 g/m², to simultaneously produce one single layer 26a, behaving both as a ductile base layer 15a and a lamination bonding layer 26a.

According to a further embodiment, not shown, a bulk layer 21a is laminated to the uncoated side (i.e. having no gas barrier coating applied) of a barrier-coated paper substrate 10a', from Fig. 1a, however not having the optional aluminium barrier deposition coating 14a, by the same methods as described above. On the inside of the barrier-coated barrier substrate there is instead laminated a pre-manufactured polymer film substrate having a barrier deposition coating, applied by means of a vapour deposition method, such as a metallisation coating laminated to the barrier-coated cellulose based substrate. The polymer film substrate may be laminated to the barrier-coated cellulose-based substrate by an interjacent bonding layer of a polymer, either by means of extrusion lamination of a thermoplastic bonding layer between the two barrier-coated webs, or by wet lamination of an aqueous adhesive. The metallised polymer film substrate may comprise a heat sealale material layer on the side of the polymer film substrate facing away from the metallisation coating, to form the second, innermost liquid-tight and heat sealable material layer. Alternatively, the metallised polymer film substrate may be further extrusion coated with the second, innermost liquid-tight and heat sealable material layer 23a. The layers and the materials and polymers are otherwise be the same as in the laminated packaging material of fig. 2a, and described above.

In yet further embodiments of either the laminated structure of Figure 2a (not shown), the innermost liquid-tight layer 23a' may consist of a pre-manufactured, blown film, comprising LDPE or LLDPE polymers in any blends thereof, and it may be laminated to the barrier-coated paper substrate, to the surface of its barrier deposition coating, i.e. the aluminium metallisation, by means of an intermediate, melt extrusion laminated bonding layer 24a, comprising a thicker tie layer of EAA than used in Fig. 2a, or a more simple bonding layer of LDPE, which is from 12 to 20 g/m², such as from 12 to 18 g/m², thick.

Alternatively, the pre-manufactured blown film 23a' may be laminated to the gas barrier coating by means of another wet lamination bonding layer, of an aqueous adhesive of an acrylic (co)polymer adhesive layer 24a', at ambient (cold) temperature, at an amount from 3 to 5 g/m². As stated above, if the barrier deposition coating 14a is not applied to the barrier-coated paper substrate, a barrier deposition coating may be applied to the pre-manufactured film instead, by vapour deposition coating.

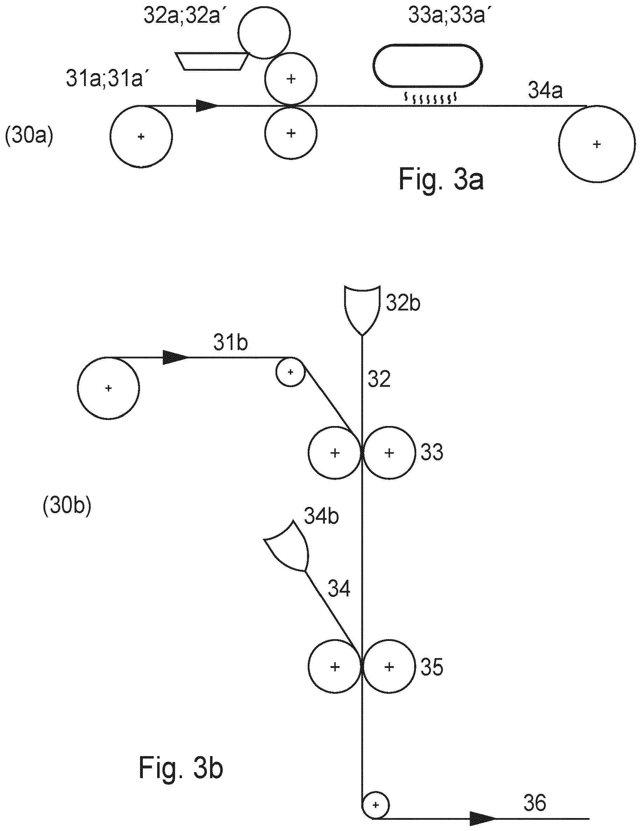

In Fig. 3a, an embodiment of a principal process of aqueous dispersion coating 30a is shown, which may be used for applying a gas barrier coating 12 from an aqueous gas barrier composition onto a substrate, or for applying a ductile base layer pre-coating from an aqueous latex composition. Alternatively, it may be used for applying an aqueous adhesive composition for wet laminating two webs together, of which at least one web has a fibrous cellulose surface. The web of cellulose-based substrate 31a (e.g. the paper 11afrom Fig. 1a) is forwarded to the dispersion coating station 32a, where the aqueous dispersion composition is applied by means of rollers onto the top surface of the substrate. The aqueous dispersion composition may have an aqueous content of from 80 to 99 weight-%, in the case of barrier compositions, thus there may be be a lot of water on the wet coated substrate that needs to be dried by heat, and evaporated off, to form a continuous coating, which is homogenous and has an even quality with respect to barrier properties and surface properties, i.e. evenness and wettability. The drying is carried out by a hot air dryer 33a, which also allows the moisture to evaporate and be removed from the surface of the substrate. The substrate temperature as it travels through the dryer, may be kept constant at a temperature of below 100 °C, such as below 90 °C, such as from 70 to 90 °C, in order to avoid defects in the coating. Drying may be partly assisted by irradiation heat from infrared IR-lamps, in combination with hot air convection drying. For the coating of the ductile base layer pre-coating, however, the aqueous content is much lower and then also less drying will be needed.

A resulting web of a ductile base layer pre-coated paper substrate 34a may optionally be calendered by passing through at least one high pressure roller nip, and is then forwarded to cool off and further wound onto a reel for intermediate storage and later further subjected to gas barrier coating operations. The further coating operations may be vapour deposition coating of a barrier deposition coating 14, or a further dispersion coating operation of a gas barrier composition, as described above, to provide a barrier-coated cellulose-based substrate.

Fig. 3b shows a process 30b for the final lamination steps in the manufacturing of the packaging laminate 20a, of Fig. 2a, respectively, after that the bulk layer 21afirst has been laminated to the barrier-coated cellulose-based substrate 10a of Fig. 1a, (i.e. 25a of Fig. 2a respectively).

As explained in connection to Fig. 2a, the bulk layer paperboard 21amay be laminated to the barrier-coated paper substrate 10a; 25aby means of wet, cold dispersion adhesive lamination, or by means of melt extrusion lamination. The adhesive may be applied by means of a same or similar method as described in connection to Fig. 3a, however not requiring drying, or very little heating.

The resulting paper pre-laminate web 31b is forwarded from an intermediate storage reel, or directly from the lamination station for laminating the paper pre-laminate. The non-laminated side of the bulk layer 21a, i.e. its print side, is joined at a cooled roller nip 33 to a molten polymer curtain 32 of the LDPE, which is to form the outermost layer 22aof the laminated material, the LDPE being extruded from an extruder feedblock and die 32b. Subsequently, the paper pre-laminated web, now having the outermost layer 22acoated on its printed side, the outside, passes a second extruder feedblock and die 34b and a lamination nip 35, where a molten polymer curtain 34 is joined and coated onto the other side of the pre-laminate, i.e. on the barrier-coated side of the paper substrate 10; 25a. Thus, the innermost heat sealable layer(s) 23a are coextrusion coated onto the inner side of the paper pre-laminate web, to form the finished laminated packaging material 36, which is finally wound onto a storage reel, not shown.

These two coextrusion steps at lamination roller nips 33 and 35, may alternatively be performed as two consecutive steps in the opposite order.

According to another embodiment, one or both of the outermost layers may instead be applied in a pre-lamination station, where the coextrusion coated layer is first applied to the outside of the (printed) bulk paperboard layer or onto the metallisation coating of the barrier-coated paper substrate, and thereafter the two pre-laminated paper webs may be joined to each other, as described above.

According to a further embodiment, the innermost layers of the heat sealable and liquid-tight thermoplastic layers are applied in the form of a pre-manufactured film, which is laminated to the coated side of the barrier-coated paper substrate 10.

As explained in connection to Fig. 2a, such an innermost layer 23a'may be laminated to the barrier-coated paper substrate 10 by means of wet, cold dispersion adhesive lamination, or by means of melt extrusion lamination.

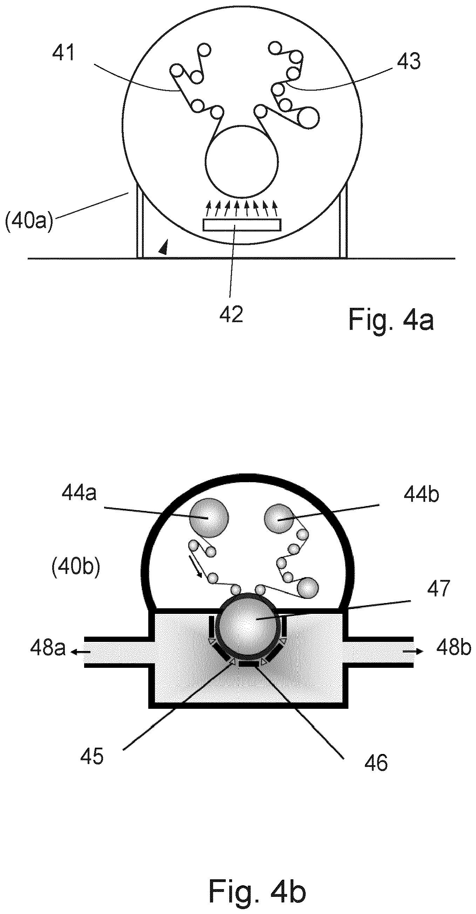

Fig. 4a is a diagrammatic view of an example of a plant 40a for physical vapour deposition, PVD, of e.g. an aluminium metal coating, onto a web substrate of the invention. The dispersion-coated paper substrate 41 is subjected, on its coated side, to continuous evaporation deposition 40, of evaporised aluminium, to form a metallised layer of aluminium or, alternatively to a mixture of oxygen with aluminium vapour, to form a deposited coating of aluminium oxide. The coating is provided at a thickness from 5 to 100 nm, preferably from 10 to 50 nm, to form the barrier-coated paper 43 of the invention. The aluminium vapour is formed from ion bombardment of an evaporation source of a solid piece of aluminium 42. For the coating of Aluminium oxide, also some oxygen gas may be injected into the plasma chamber via inlet ports.

Fig. 4b is a diagrammatic view of an example of a plant 40b for plasma enhanced chemical vapour deposition coating, PECVD, of e.g. hydrogenated amorphous diamond-like carbon coatings onto a web substrate of the invention. The web substrate 44a is subjected, on one of its surfaces, to continuous PECVD, of a plasma, in a plasma reaction zone 45 created in the space between magnetron electrodes 46, and a chilled web-transporting drum 47, which is also acting as an electrode, while the substrate is forwarded by the rotating drum, through the plasma reaction zone along the circumferential surface of the drum, and subsequently wound onto a roller as a barrier-coated web substrate 44b. The plasma for deposition coating of an amorphous DLC coating layer may for example be created from injecting a gas precursor composition comprising an organic hydrocarbon gas, such as acetylene or methane, into the plasma reaction chamber. Other gas barrier coatings may be applied by the same principal PECVD method, such as silicon oxide coatings, SiOx, then starting from a precursor gas of an organosilicon compound. The PECVD plasma chamber is kept at vaccum conditions by continuously evacuating the chamber at outlet ports 48a and 48b.

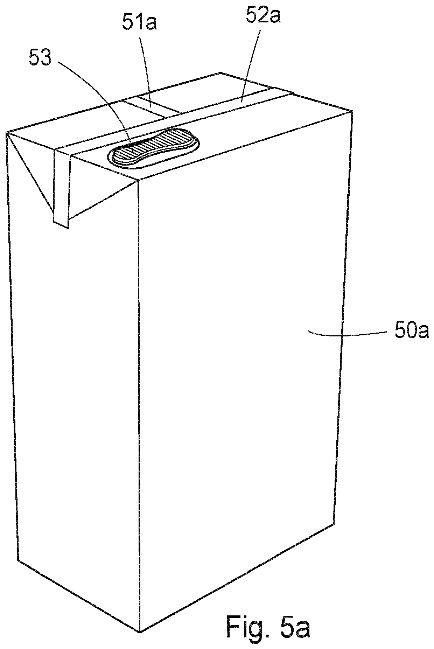

Fig. 5a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still easy to handle and dimensionally stable enough to put on a shelf in the food store or on any flat surface.

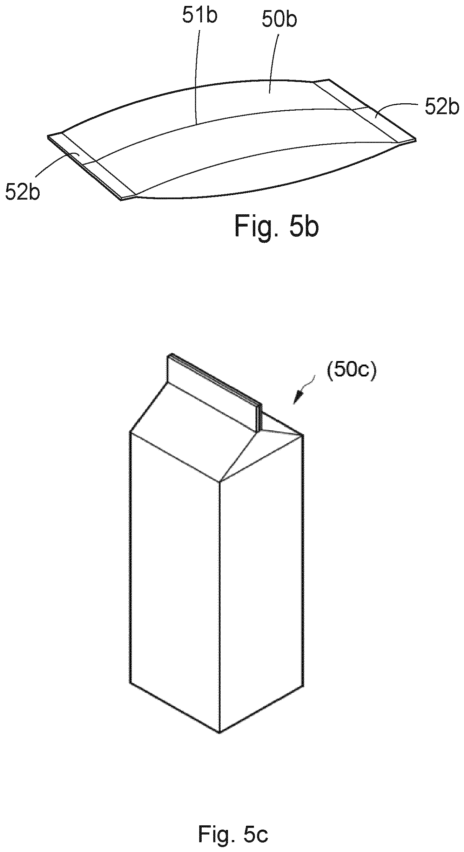

Fig. 5b shows an alternative example of a packaging container 50b produced from an alternative packaging laminate according to the invention. The alternative packaging laminate is thinner by having a thinner paper bulk layer, and thus it is not dimensionally stable enough to form a parallellepipedic or wedge-shaped packaging container, and is not fold formed after transversal sealing 52b. The packaging container will remain a pillow-shaped pouch-like container and be distributed and sold in this form.

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

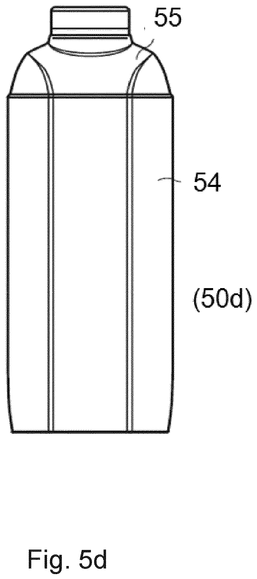

Fig. 5d shows a bottle-like package 50d, which is a combination of a sleeve 54 formed from a pre-cut blank of the laminated packaging material of the invention, and a top 55, which is formed by injection moulding plastics in combination with an opening device such as a screw cork or the like. This type of packages are for example marketed under the trade names of Tetra Top^{®} and Tetra Evero^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

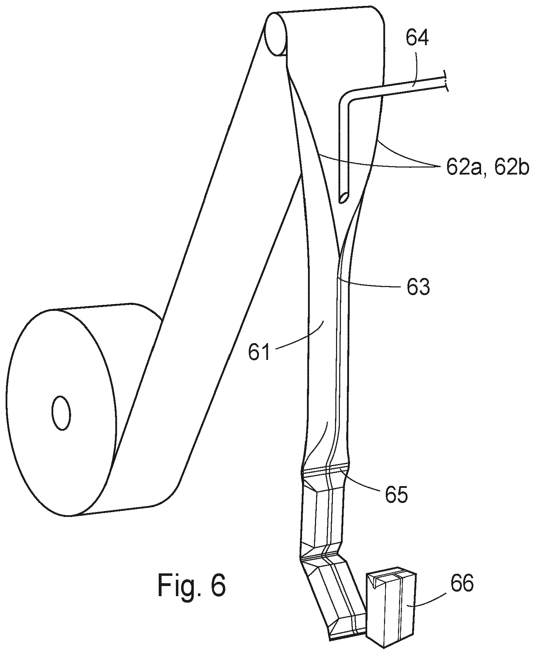

Fig. 6 shows the principle as described in the introduction of the present application, i.e. a web of packaging material is formed into a tube 61 by overlapping the longitudinal edges 62, 62' of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material.

Fig. 7 shows the effect of surface roughness on the oxygen transmission rate of the coated papers listed in Table 2, at 70% RH (ml/m².day).

Fig. 8 shows the principal structure of a the ductile cellulose-based substrate A, as pre-coated with a ductile base layer pre-coating B on its top side, and further, optionally coated with a similar ductile coating C on its backside.

## Claims

1. Laminated packaging material (20a) for packaging of oxygen-sensitive products comprising a barrier-coated cellulose-based substrate (10a) and further a first outermost, protective material layer (22a) and a second innermost, liquid tight and heat sealable material layer (23a), the barrier-coated cellulose-based substrate comprising
a cellulose-based substrate (11) having a density of at least 900 kg/m³, and a grammage from 30 to 80 g/m², and
applied on a first side of the cellulose-based substrate, at least one gas barrier coating (13a, 14a) of at least one gas barrier material to a total thickness from 2 to 7000 nm, such as from 2 to 5000 nm, such as from 2 to 4000 nm,
wherein the barrier-coated cellulose-based substrate (10) further comprises a ductile base layer pre-coating (12a),
which is applied by means of dispersion coating and subsequent drying, onto the surface of the first side of the cellulose-based substrate (11) and positioned beneath the at least one gas barrier coating (13a, 14a),
wherein the at least one gas barrier coating (13a, 14a) comprises a barrier dispersion coating (13a), first applied by means of dispersion or solution coating onto the ductile base layer pre-coating, and a barrier deposition coating (14a), subsequently applied by means of a vapour deposition method onto the barrier dispersion coating,
the barrier dispersion coating being applied at an amount from 0.2 to 5 g/m², dry weight,
the barrier deposition coating being a vapour deposition coating of a material selected from metals, metal oxides, inorganic oxides and carbon coatings, and applied at a thickness from 5 to 200 nm,
wherein the ductile base layer pre-coating (12a) is obtained from an aqueous latex composition, such as a latex selected from the group comprising styrene-butadiene latex (SB-latex), methylstyrene-butadiene latex, styrene acrylate latex (SA-latex), acrylate latex, such as vinyl acrylic copolymers and vinyl acetate acrylate latex, styrene-butadiene-acrylonitrile latex, styrene-acrylate-acrylonitrile latex, styrene-butadiene-acrylate-acrylonitrile latex, styrene-maleic anhydride latex, styrene-acrylate-maleic anhydride latex, mixtures thereof, or bio-based latex made with plant-based polymer materials, the plant-based polymer materials being selected from the group comprising starch derivatives, including modified starches and crosslinked starches, polyisoprene, lignin-based polymers, alginates and gums, such as guar gum, and soy-based proteins, and is applied at a grammage from 2 to 15 g/m², dry weight, the barrier-coated cellulose-based substrate thus being suitable for providing gas barrier properties in a laminated packaging material and in packages made thereof.

2. Laminated packaging material (20a) as claimed in claim 1, wherein the barrier dispersion coating (13a) comprises a polymer selected from the group consisting of vinyl alcohol polymers and copolymers, such as from the group consisting of polyvinyl alcohol, PVOH, and ethylene vinyl alcohol, EVOH, starch and starch derivatives, xylan, xylan derivative, nanofibrillar/ microfibrillar cellulose, NFC/ MFC, nanocrystalline cellulose, NCC, and blends of two or more thereof.

3. Laminated packaging material (20a) as claimed in any one of the preceding claims, wherein the barrier dispersion coating (13a) is applied at a total amount of from 0.2 to 4 g/m², more preferably from 0.5 to 4 g/m², such as from 0.5 to 3.5 g/m², such as from 1 to 3 g/m², dry weight.

4. Laminated packaging material (20a) as claimed in any one of claims, wherein the barrier dispersion coating (13a) is applied as two part-layers or "part-coatings", each layer being applied in amounts from 0.2 to 2.5 g/m², preferably from 0.5 to 1.5 g/m².

5. Laminated packaging material (20a) as claimed in any one of the preceding claims, wherein the barrier deposition coating (14a) is applied by means of physical vapour deposition (PVD) or chemical vapour deposition (CVD).

6. Laminated packaging material (20a) as claimed in any one of the preceding claims, wherein the barrier deposition coating (14a) is applied at a thickness from 5 to 100 nm.

7. Laminated packaging material (20a) as claimed in any one of the preceding claims, wherein the barrier deposition coating (14a) is an aluminium metallisation coating.

8. Laminated packaging material (20a) as claimed in any one of the preceding claims, wherein the ductile base layer pre-coating (12a) further comprises a filler material, such as an inorganic filler.

9. Laminated packaging material (20a) as claimed in any one of the preceding claims, wherein the ductile base layer pre-coating (12a) comprises per dry weight from 10 to 20 wt% of the polymer binder material having inherent ductility properties, from 75 to 85 wt-% of an inorganic filler, from 3 to 5 wt% of a crosslinking compound, such as starch, and from 1 to 2 wt% of a thickening agent.

10. Laminated packaging material (20a) as claimed in any one of claims 8-9, wherein the filler material is an inorganic laminar compound, such as bentonite or kaolin.

11. Laminated packaging material (20a) as claimed in any one of the preceding claims, wherein the ductile base layer pre-coating has a grammage from 5 to 15 g/m², such as from 8 to 15 g/m², such as from 10 to 15 g/m².

12. Laminated packaging material (20a) as claimed in any one of the preceding claims, wherein the cellulose-based substrate has a second ductile coating (15a) on its opposite side, such as of the same composition as the ductile base layer pre-coating (12a).

13. Laminated packaging material (20a) as claimed in any one of claims 8-12, wherein the cellulose-based substrate with the ductile base layer pre-coating has an ash content from 15 to 25 wt%, such as from 15 to 23 wt%, as determined by ISO1762:2019.

14. Laminated packaging material (20a) as claimed in any one of the preceding claims, wherein the cellulose-based substrate, including the ductile base layer pre-coating (12a), has a density of at least 950 kg/m³, such as at least 1000 kg/m³, such as at least 1100 kg/m³, as measured according to ISO 534:2011, and a grammage from 35 to 75 g/m², such as from 40 to 75 g/m², such as from 45 to 70 g/m², such as from 45 to 65 g/m².

15. Laminated packaging material (20a) as claimed in any one of the preceding claims, wherein the cellulose-based substrate including the ductile base layer pre-coating (12a), is calendered to an air permeance value lower than 100 nm/(Pa.s) which is the lower limit of applicability of the test method ISO 5636-5:2013, and further lower than 1 nm, such as from 40 to 900 pm/(Pa.s), such as from 40 to 800 pm/(Pa.s), such as from 100 to 700 pm/(Pa.s), such as from 200 to 500 pm/(Pa.s), as determined by SCAN-P 26:78.

16. Laminated packaging material (20a) as claimed in any one of the preceding claims, wherein the barrier-coated cellulose-based substrate (10a) including the ductile base layer pre-coating (12a) and the at least one gas barrier coating (13a, 14a), has a PPS surface roughness lower than 3.0 µm, such as lower than 2.8 µm, such as lower than 2.5 µm, such as lower than 2.2 µm, such as lower than 2.0 µm, such as 1.8 µm or below, as measured according to TAPPI 555 om-15, being the same as ISO 8791-4.

17. Laminated packaging material (20a) as claimed in any one of the preceding claims, wherein the cellulose-based substrate comprises at least 50 wt%, such as from 60 to 100 wt%, such as from 70 to 100 wt% softwood cellulose, such as Kraft softwood cellulose.

18. Laminated packaging material (20a) as claimed in any one of the preceding claims, wherein the pre-coated and dried cellulose-based substrate with the ductile base layer pre-coating (12a) is supercalendered before further coating with the gas barrier coating(s) (13a, 14a).

19. Laminated packaging material (20a) according to any one of the preceding claims, further comprising a bulk layer (21a) of paper or paperboard or other cellulose-based material, a first outermost protective material layer (22a), a second innermost liquid tight, heat sealable material layer (23a;) and, arranged on the inner side of the bulk layer of paper or paperboard, between the bulk layer and the innermost, liquid tight, heat sealable material layer, said barrier-coated cellulose-based substrate (10a).

20. Laminated packaging material (20a) according to claim 19, wherein the barrier-coated cellulose-based substrate (10a) is bonded to the bulk layer (21a) by an intermediate bonding layer (26a) comprising a composition comprising a binder selected from the group consisting of acrylic polymers and copolymers, starch, cellulose and polysaccharide derivatives, polymers and copolymers of vinyl acetate and/or vinyl alcohol.

21. Laminated packaging material (20a) according to any one of the preceding claims, wherein the second innermost liquid tight, heat sealable material layer (23a') is a pre-manufactured polymer film for improved robustness of the mechanical properties of the packaging material.

22. Packaging container (50a; 50b; 50c; 50d) comprising the laminated packaging material as defined in any one of claims 1-21.

## Patentansprüche

1. Laminiertes Verpackungsmaterial (20a) zum Verpacken von sauerstoffempfindlichen Produkten, umfassend ein barrierebeschichtetes Substrat (10a) auf Cellulosebasis und des Weiteren eine erste äußerste schützende Materialschicht (22a) und eine zweite innerste flüssigkeitsdichte und heißsiegelbare Materialschicht (23a), wobei das barrierebeschichtete Substrat auf Cellulosebasis umfasst:
ein Substrat (11) auf Cellulosebasis mit einer Dichte von mindestens 900 kg/m³ und einer Grammatur von 30 bis 80 g/m³, und
aufgebracht auf eine erste Seite des Substrats auf Cellulosebasis mindestens eine Gasbarrierebeschichtung (13a, 14a) aus mindestens einem Gasbarrierematerial auf eine Gesamtdicke von 2 bis 7000 nm, wie 2 bis 5000 nm, wie 2 bis 4000 nm,
wobei das barrierebeschichtete Substrat (10) auf Cellulosebasis des Weiteren eine duktile Basisschichtvorbeschichtung (12a) umfasst,
die mittels Dispersionsbeschichtung und nachfolgender Trocknung auf die Oberfläche der ersten Seite des Substrats (11) auf Cellulosebasis aufgebracht und unter der mindestens einen Gasbarrierebeschichtung (13a, 14a) positioniert wird,
wobei die mindestens eine Gasbarrierebeschichtung (13a, 14a) eine Barrieredispersionsbeschichtung (13a), die zuerst mittels Dispersions- oder Lösungsbeschichtung auf die duktile Basisschichtvorbeschichtung aufgebracht wurde, und eine Barriereabscheidungsbeschichtung (14a) umfasst, die nachfolgend mittels eines Dampfabscheidungsverfahrens auf die Barrieredispersionsbeschichtung aufgebracht wird,
wobei die Barrieredispersionsbeschichtung in einer Menge von 0,2 bis 5 g/m², Trockengewicht, aufgebracht wird, die Barriereabscheidungsbeschichtung eine Dampfabscheidungsbeschichtung eines Materials ausgewählt aus Metallen, Metalloxiden, anorganischen Oxiden und Kohlenstoffbeschichtungen ist und in einer Dicke von 5 bis 200 nm aufgebracht wird,
wobei die duktile Basisschichtvorbeschichtung (12a) aus einer wässrigen Latexzusammensetzung erhalten wird, wie einem Latex ausgewählt aus der Gruppe umfassend Styrol-Butadien-Latex (SB-Latex), Methylstyrol-Butadien-Latex, Styrol-Acrylat-Latex (SA-Latex), Acrylatlatex, wie vinylacrylischen Copolymeren und Vinylacetat-Acrylat-Latex, Styrol-Butadien-Acrylnitril-Latex, Styrol-Acrylat-Acrylnitril-Latex, Styrol-Butadien-Acrylat-Acrylnitril-Latex, Styrol-Maleinsäureanhydrid-Latex, Styrol-Acrylat-Maleinsäureanhydrid-Latex, Mischungen davon oder Latex auf Biobasis, der mit Polymermaterialien auf Pflanzenbasis gefertigt ist, wobei die Polymermaterialien auf Pflanzenbasis ausgewählt sind aus der Gruppe umfassend Stärkederivate, einschließlich modifizierten Stärken und vernetzten Stärken, Polyisopren, Polymeren auf Ligninbasis, Alginaten und Gummis, wie Guargum, sowie Proteinen auf Sojabasis, und in einer Grammatur von 2 bis 15 g/m², Trockengewicht, aufgebracht wird, wobei das barrierebeschichtete Substrat auf Cellulosebasis somit geeignet ist, um in einem laminierten Verpackungsmaterial und in daraus gefertigten Verpackungen Gasbarriereeigenschaften bereitzustellen.

2. Laminiertes Verpackungsmaterial (20a) nach Anspruch 1, wobei die Barrieredispersionsbeschichtung (13a) ein Polymer ausgewählt aus der Gruppe bestehend aus Vinylalkoholpolymeren und -copolymeren, wie aus der Gruppe bestehend aus Polyvinylalkohol, PVOH, und Ethylen-Vinylalkohol, EVOH, Stärke und Stärkederivaten, Xylan, Xylanderivaten, nanofibrillierter/mikrofibrillierter Cellulose, NCC und Gemischen von zwei oder mehr davon umfasst.

3. Laminiertes Verpackungsmaterial (20a) nach einem der vorhergehenden Ansprüche, wobei die Barrieredispersionsbeschichtung (13a) in einer Gesamtmenge von 0,2 bis 4 g/m², bevorzugter 0,5 bis 4 g/m², wie 0,5 bis 3,5 g/m², wie 1 bis 3 g/m², Trockengewicht, aufgebracht ist.

4. Laminiertes Verpackungsmaterial (10a) nach einem der vorhergehenden Ansprüche, wobei die Barrieredispersionsbeschichtung (13a) als zweiteilige Schichten oder "Teilbeschichtungen" aufgebracht ist, wobei jede Schicht in Mengen von 0,2 bis 2,5 g/m², vorzugsweise 0,5 bis 1,5 g/m² aufgebracht ist.

5. Laminiertes Verpackungsmaterial (20a) nach einem der vorhergehenden Ansprüche, wobei die Barriereabscheidungsbeschichtung (14a) durch physikalische Dampfabscheidung (PVD) oder chemische Dampfabscheidung (CVD) aufgebracht ist.

6. Laminiertes Verpackungsmaterial (20a) nach einem der vorhergehenden Ansprüche, wobei die Barriereabscheidungsbeschichtung (14a) in einer Dicke von 5 bis 100 nm aufgebracht ist.

7. Laminiertes Verpackungsmaterial (20a) nach einem der vorhergehenden Ansprüche, wobei die Barriereabscheidungsbeschichtung (14a) eine Aluminiummetallisierungsbeschichtung ist.

8. Laminiertes Verpackungsmaterial (20a) nach einem der vorhergehenden Ansprüche, wobei die duktile Basisschichtvorbeschichtung (12a) des Weiteren ein Füllstoffmaterial umfasst, wie einen anorganischen Füllstoff.

9. Laminiertes Verpackungsmaterial (20a) nach einem der vorhergehenden Ansprüche, wobei die duktile Basisschichtvorbeschichtung (12a) pro Trockengewicht 10 bis 20 Gew.% des Polymerbindemittelmaterials mit inhärenten Duktilitätseigenschaften, von 75 bis 85 Gew.% eines anorganischen Füllstoffs, von 3 bis 5 Gew.% einer Vernetzungsverbindung, wie Stärke, und von 1 bis 2 Gew.% eines Verdickungsmittels umfasst.

10. Laminiertes Verpackungsmaterial (20a) nach einem der Ansprüche 8 bis 9, wobei das Füllstoffmaterial eine anorganische laminare Verbindung ist, wie Bentonit oder Kaolin.

11. Laminiertes Verpackungsmaterial (20a) nach einem der vorhergehenden Ansprüche, wobei die duktile Basisschichtvorbeschichtung eine Grammatur von 5 bis 15 g/m², wie von 8 bis 15 g/m², wie von 10 bis 15 g/m² aufweist.

12. Laminiertes Verpackungsmaterial (20a) nach einem der vorhergehenden Ansprüche, wobei das Substrat auf Cellulosebasis eine zweite duktile Beschichtung (15a) auf seiner Gegenseite aufweist, wie aus derselben Zusammensetzung wie die duktile Basisschichtvorbeschichtung (12a).

13. Laminiertes Verpackungsmaterial (20a) nach einem der Ansprüche 8 bis 12, wobei das Substrat auf Cellulosebasis mit der duktilen Basisschichtvorbeschichtung einen Aschegehalt von 15 bis 25 Gew.%, wie 15 bis 23 Gew.% aufweist, bestimmt gemäß ISO 1762:2019.

14. Laminiertes Verpackungsmaterial (20a) nach einem der vorhergehenden Ansprüche, wobei das Substrat auf Cellulosebasis, einschließlich der duktilen Basisschichtvorbeschichtung (12a), eine Dichte von mindestens 950 kg/m³, wie mindestens 1000 kg/m³, wie mindestens 1100 kg/m³ aufweist, gemessen gemäß ISO 534:2011, sowie eine Grammatur von 35 bis 75 g/m², wie von 40 bis 75 g/m², wie von 45 bis 70 g/m², wie von 45 bis 65 g/m².

15. Laminiertes Verpackungsmaterial (20a) nach einem der vorhergehenden Ansprüche, wobei das Substrat auf Cellulosebasis einschließlich der duktilen Basisschichtvorbeschichtung (12a) auf einen Luftdurchlässigkeitswert kleiner als 100 nm/(Pa·s) kalandriert ist, der die Untergrenze der Anwendbarkeit des Prüfverfahrens ISO 5636-5:2013 ist, und weiterhin niedriger als 1 nm, wie von 40 bis 900 pm/(Pa·s), wie von 40 bis 800 pm/(Pa·s), wie von 100 bis 700 pm/(Pa·s), wie von 200 bis 500 pm/(Pa·s) ist, bestimmt gemäß SCAN-P 26:78.

16. Laminiertes Verpackungsmaterial (20a) nach einem der vorhergehenden Ansprüche, wobei das barrierebeschichtete Substrat (10a) auf Cellulosebasis einschließlich der duktilen Basisschichtvorbeschichtung (12a) und der mindestens einen Gasbarrierebeschichtung (13a, 14a) eine PPS-Oberflächenrauheit kleiner als 3,0 µm, wie kleiner als 2,8 µm, wie kleiner als 2,5 µm, wie kleiner als 2,2 µm, wie kleiner als 2,0 µm, wie 1,8 µm oder darunter aufweist, gemessen gemäß TAPPI 555 om-15, die die gleiche wie ISO 8791-4 ist.

17. Laminiertes Verpackungsmaterial (20a) nach einem der vorhergehenden Ansprüche, wobei das Substrat auf Cellulosebasis mindestens 50 Gew.%, wie 60 bis 100 Gew.%, wie 70 bis 100 Gew.% Weichholzcellulose, wie Kraft-Weichholzcellulose, umfasst.

18. Laminiertes Verpackungsmaterial (20a) nach einem der vorhergehenden Ansprüche, wobei das vorbeschichtete und getrocknete Substrat auf Cellulosebasis mit der duktilen Basisschichtvorbeschichtung (12a) vor dem weiteren Beschichten mit der/den Gasbarrierebeschichtung(en) (13a, 14a) superkalandriert wird.

19. Laminiertes Verpackungsmaterial (20a) nach einem der vorhergehenden Ansprüche, des Weiteren umfassend eine Massenschicht (21a) aus Papier oder Karton oder sonstigem Material auf Cellulosebasis, eine erste äußerste schützende Materialschicht (22a), eine zweite innerste flüssigkeitsdichte, heißsiegelbare Materialschicht (23a); und, angeordnet auf der Innenseite der Massenschicht aus Papier oder Karton, zwischen der Massenschicht und der innersten flüssigkeitsdichten heißsiegelbaren Materialschicht, das barrierebeschichtete Substrat (10a) auf Cellulosebasis.

20. Laminiertes Verpackungsmaterial (20a) nach Anspruch 19, wobei das barrierebeschichtete Substrat (10a) auf Cellulosebasis über eine Zwischenbondingschicht (26a), umfassend eine Zusammensetzung, umfassend ein Bindemittel ausgewählt aus der Gruppe bestehend aus Acrylpolymeren und -copolymeren, Stärke, Cellulose und Polysaccharidderivaten, Polymeren und Copolymeren von Vinylacetat und/oder Vinylalkohol, an die Massenschicht (21a) gebondet ist.

21. Laminiertes Verpackungsmaterial (20a) nach einem der vorhergehenden Ansprüche, wobei die zweite innerste flüssigkeitsdichte heißsiegelbare Materialschicht (23a') ein vorgefertigter Polymerfilm für verbesserte Robustheit der mechanischen Eigenschaften des Verpackungsmaterials ist.

22. Verpackungsbehälter (50a; 50b; 50c; 50d), umfassend das laminierte Verpackungsmaterial gemäß einem der Ansprüche 1 bis 21.

## Revendications

1. Matériau d'emballage stratifié (20a) pour l'emballage de produits sensibles à l'oxygène comprenant un substrat à base de cellulose revêtu par une barrière (10a) et en outre une première couche de matériau protecteur, la plus à l'extérieur (22a) et une deuxième couche de matériau thermoscellable et étanche aux liquides, la plus à l'intérieur (23a), le substrat à base de cellulose revêtu par une barrière comprenant
un substrat à base de cellulose (11) ayant une densité d'au moins 900 kg/m³, et un grammage de 30 à 80 g/m², et
appliqué sur un premier côté du substrat à base de cellulose, au moins un revêtement barrière aux gaz (13a, 14a) d'au moins un matériau barrière aux gaz jusqu'à une épaisseur totale de 2 à 7 000 nm, telle que de 2 à 5 000 nm, telle que de 2 à 4 000 nm,
le substrat à base de cellulose revêtu par une barrière (10) comprenant en outre un pré-revêtement de couche de base ductile (12a),
qui est appliqué au moyen d'un revêtement de dispersion et séchage subséquent, sur la surface du premier côté du substrat à base de cellulose (11) et positionné en dessous de l'au moins un revêtement barrière aux gaz (13a, 14a),
l'au moins un revêtement barrière aux gaz (13a, 14a) comprenant un revêtement de dispersion de barrière (13a), d'abord appliqué au moyen d'un revêtement de dispersion ou de solution sur le pré-revêtement de couche de base ductile, et un revêtement de dépôt de barrière (14a), subséquemment appliqué au moyen d'un procédé de dépôt en phase vapeur, sur le revêtement de dispersion de barrière,
le revêtement de dispersion de barrière étant appliqué à raison d'une quantité de 0,2 à 5 g/m², poids sec,
le revêtement de dépôt de barrière étant un revêtement de dépôt en phase vapeur d'un matériau choisi parmi des métaux, des oxydes métalliques, des oxydes inorganiques et des revêtements de carbone, et étant appliqué à une épaisseur de 5 à 200 nm,
le pré-revêtement de couche de base ductile (12a) étant obtenu à partir d'une composition aqueuse de latex, tel qu'un latex choisi dans le groupe comprenant un latex de styrène-butadiène (latex SB), un latex de méthylstyrène-butadiène, un latex de styrène acrylate (latex SA), un latex d'acrylate, tel que des copolymères vinyliques acryliques et un latex d'acétate de vinyle acrylate, un latex de styrène-butadiène-acrylonitrile, un latex de styrène-acrylate-acrylonitrile, un latex de styrène-butadiène-acrylate-acrylonitrile, un latex de styrène-anhydride maléique, un latex de styrène-acrylate-anhydride maléique, des mélanges correspondants, ou un latex d'origine biologique préparé avec des matériaux de polymère d'origine végétale, les matériaux de polymère d'origine végétale étant choisis dans le groupe comprenant des dérivés d'amidon, y compris des amidons modifiés et des amidons réticulés, un polyisoprène, des polymères à base de lignine, des alginates et des gommes, telles qu'une gomme de guar, et des protéines à base de soja, et étant appliqué à un grammage de 2 à 15 g/m², poids sec, le substrat à base de cellulose revêtu par une barrière étant ainsi approprié pour fournir des propriétés de barrière aux gaz dans un matériau d'emballage stratifié et dans des emballages préparés avec celui-ci.

2. Matériau d'emballage stratifié (20a) selon la revendication 1, le revêtement de dispersion de barrière (13a) comprenant un polymère choisi dans le groupe constitué par des polymères et copolymères d'alcool vinylique, tels que dans le groupe constitué par un poly(alcool vinylique), PVOH, et un éthylène alcool vinylique, EVOH, un amidon et des dérivés d'amidon, un xylane, un dérivé de xylane, une cellulose nanofibrillaire/microfibrillaire, NFC/MFC, une cellulose nanocristalline, NCC, et des mélanges de deux ou plus de ceux-ci.

3. Matériau d'emballage stratifié (20a) selon l'une quelconque des revendications précédentes, le revêtement de dispersion de barrière (13a) étant appliqué à raison d'une quantité totale allant de 0,2 à 4 g/m², plus préférablement de 0,5 à 4 g/m², telle que de 0,5 à 3,5 g/m², telle que de 1 à 3 g/m², poids sec.

4. Matériau d'emballage stratifié (20a) selon l'une quelconque des revendications, le revêtement de dispersion de barrière (13a) étant appliqué en tant que deux couches partielles ou « revêtements partiels », chaque couche étant appliquée en des quantités de 0,2 à 2,5 g/m², préférablement de 0,5 à 1,5 g/m².

5. Matériau d'emballage stratifié (20a) selon l'une quelconque des revendications précédentes, le revêtement de dépôt de barrière (14a) étant appliqué au moyen d'un dépôt physique en phase vapeur (PVD) ou d'un dépôt chimique en phase vapeur (CVD).

6. Matériau d'emballage stratifié (20a) selon l'une quelconque des revendications précédentes, le revêtement de dépôt de barrière (14a) étant appliqué à raison d'une épaisseur de 5 à 100 nm.

7. Matériau d'emballage stratifié (20a) selon l'une quelconque des revendications précédentes, le revêtement de dépôt de barrière (14a) étant un revêtement de métallisation d'aluminium.

8. Matériau d'emballage stratifié (20a) selon l'une quelconque des revendications précédentes, le pré-revêtement de couche de base ductile (12a) comprenant en outre un matériau de charge, tel qu'une charge inorganique.

9. Matériau d'emballage stratifié (20a) selon l'une quelconque des revendications précédentes, le pré-revêtement de couche de base ductile (12a) comprenant par poids sec de 10 à 20 % en poids du matériau liant de polymère ayant des propriétés de ductilité inhérentes, de 75 à 85 % en poids d'une charge inorganique, de 3 à 5 % en poids d'un composé de réticulation, tel qu'un amidon, et de 1 à 2 % en poids d'un agent épaississant.

10. Matériau d'emballage stratifié (20a) selon l'une quelconque des revendications 8 à 9, le matériau de charge étant un composé laminaire inorganique, tel qu'une bentonite ou un kaolin.

11. Matériau d'emballage stratifié (20a) selon l'une quelconque des revendications précédentes, le pré-revêtement de couche de base ductile ayant un grammage de 5 à 15 g/m², tel que de 8 à 15 g/m², tel que de 10 à 15 g/m².

12. Matériau d'emballage stratifié (20a) selon l'une quelconque des revendications précédentes, le substrat à base de cellulose ayant un deuxième revêtement ductile (15a) sur son côté opposé, tel que de la même composition que le pré-revêtement de couche de base ductile (12a).

13. Matériau d'emballage stratifié (20a) selon l'une quelconque des revendications 8 à 12, le substrat à base de cellulose avec le pré-revêtement de couche de base ductile ayant une teneur en cendres de 15 à 25 % en poids, telle que de 15 à 23 % en poids, comme déterminée par la norme ISO 1762 : 2019.

14. Matériau d'emballage stratifié (20a) selon l'une quelconque des revendications précédentes, le substrat à base de cellulose, y compris le pré-revêtement de couche de base ductile (12a), ayant une densité d'au moins 950 kg/m³, telle que d'au moins 1 000 kg/m³, telle que d'au moins 1 100 kg/m³, comme mesurée selon la norme ISO 534 : 2011, et un grammage de 35 à 75 g/m², tel que de 40 à 75 g/m², tel que de 45 à 70 g/m², tel que le 45 à 65 g/m².

15. Matériau d'emballage stratifié (20a) selon l'une quelconque des revendications précédentes, le substrat à base de cellulose, y compris le pré-revêtement de couche de base ductile (12a), étant calandré jusqu'à une valeur de perméance à l'air plus basse que 100 nm/(Pa.s) qui est la limite inférieure d'applicabilité du procédé de test de la norme ISO 5636-5 : 2013, et en outre inférieure à 1 nm, telle que de 40 à 900 pm/(Pa.s), telle que de 40 à 800 pm/(Pa.s), telle que de 100 à 700 pm/(Pa.s), telle que de 200 à 500 pm/(Pa.s), comme déterminée par SCAN-P 26:78.

16. Matériau d'emballage stratifié (20a) selon l'une quelconque des revendications précédentes, le substrat à base de cellulose revêtu par une barrière (10a), y compris le pré-revêtement de couche de base ductile (12a) et l'au moins un revêtement barrière aux gaz (13a, 14a), ayant une rugosité de surface PPS inférieure à 3,00 µm, telle qu'inférieure à 2,80 µm, telle qu'inférieure à 2,50 µm, telle qu'inférieure à 2,20 µm, telle qu'inférieure à 2,00 µm, telle que 1,8 µm ou moins, comme mesurée selon la norme TAPPI 555 om-15, qui est la même que la norme ISO 8791-4.

17. Matériau d'emballage stratifié (20a) selon l'une quelconque des revendications précédentes, le substrat à base de cellulose comprenant au moins 50 % en poids, tel que de 60 à 100 % en poids, tel que de 70 à 100 % en poids de cellulose de bois tendre, telle qu'une cellulose de bois tendre Kraft.

18. Matériau d'emballage stratifié (20a) selon l'une quelconque des revendications précédentes, le substrat à base de cellulose pré-revêtu et séché comportant le pré-revêtement de couche de base ductile (12a) étant super-calandré avant un revêtement supplémentaire par le ou les revêtements barrière aux gaz (13a, 14a).

19. Matériau d'emballage stratifié (20a) selon l'une quelconque des revendications précédentes, comprenant en outre une couche de masse (21a) de papier ou de carton ou d'un autre matériau à base de cellulose, une première couche de matériau protecteur la plus à l'extérieur (22a), une deuxième couche de matériau thermoscellable, étanche aux liquides la plus à l'intérieur (23a ;) et, agencé sur le côté intérieur de la couche de masse de papier ou de carton, entre la couche de masse et la couche de matériau thermoscellable, étanche aux liquides, la plus à l'intérieur, ledit substrat à base de cellulose revêtu par une barrière (10a).

20. Matériau d'emballage stratifié (20a) selon la revendication 19, le substrat à base de cellulose revêtu par une barrière (10a) étant lié à la couche de masse (21a) par une couche de liaison intermédiaire (26a) comprenant une composition comprenant un liant choisi dans le groupe constitué par des polymères et des copolymères acryliques, un amidon, une cellulose et des dérivés de polysaccharide, des polymères et des copolymères d'acétate de vinyle et/ou d'alcool vinylique.

21. Matériau d'emballage stratifié (20a) selon l'une quelconque des revendications précédentes, la deuxième couche de matériau thermoscellable, étanche aux liquides la plus à l'intérieur (23a') étant un film de polymère préfabriqué pour une robustesse améliorée des propriétés mécaniques du matériau d'emballage.

22. Récipient d'emballage (50a ; 50b ; 50c ; 50d) comprenant le matériau d'emballage stratifié tel que défini dans l'une quelconque des revendications 1 à 21.
